# EUROPEAN PATENT SPECIFICATION

(11) **EP 3 632 758 B1**
(45) Date of publication and mention of the grant of the patent: **07.09.2022**
(21) Application number: 19196251.3
(22) Date of filing: 09.09.2019
(51) Int. Cl.: B60T 8/32, B60T 8/40, B60T 8/88, B60T 17/22, B60T 13/14, B60T 13/74, B60T 13/66, B60T 13/68, B60T 8/26

(54) **ACTUATOR CONTROLLER AND VEHICLE-INSTALLED SYSTEM**
AKTUATORSTEUERGERÄT UND FAHRZEUGINSTALLIERTES SYSTEM
ORGANE DE COMMANDE D'ACTIONNEUR ET SYSTÈME INSTALLÉ DANS UN VÉHICULE

(30) Priority: 03.10.2018 JP 2018188513
(43) Date of publication of application: 08.04.2020
(73) Proprietor: TOYOTA JIDOSHA KABUSHIKI KAISHA, Aichi-ken, 471-8571 (JP)
(72) Inventor: MIZUTANI, Yasuji, Aichi-ken, 471-8571 (JP)
(74) Representative: J A Kemp LLP

(56) References cited:
- EP-A1- 1 916 168
- EP-A1- 2 489 564
- EP-A1- 2 824 007
- EP-B1- 2 489 564
- WO-A1-95/03962
- WO-A1-2011/098877
- DE-A1- 19 732 229
- US-A1- 2003 233 179

## Description

### BACKGROUND

The following disclosure relates to an actuator controller configured to control an actuator operable by electric power supplied from the vehicle-mounted power source, and to a vehicle-installed system including the actuator controller.

Patent Document 1 (Japanese Patent Application Publication No. 2009-227093) discloses an actuator controller configured to control an electromagnetic valve and a pump motor operable by electric power supplied from a vehicle-mounted power source. The electromagnetic valve is configured to control a hydraulic pressure in a hydraulic brake provided for a wheel. The pump motor is configured to drive a pump configured to supply a hydraulic pressure to an accumulator capable of supplying a hydraulic pressure to the hydraulic brake. The vehicle-mounted power source includes a main power source and an auxiliary power source. In the event of a malfunction in the main power source, the electromagnetic valve and the pump motor are operated by electric power supplied from the auxiliary power source. Suppliable electric power that is electric power suppliable from the auxiliary power source is obtained based on the voltage of the auxiliary power source. The pump motor is operated using electric power obtained by subtracting electromagnetic-valve-requested electric power from the suppliable electric power. The electromagnetic-valve-requested electric power is electric power requested for the electromagnetic valve. WO 95/03962 discloses an anti-lock braking system comprising a plurality of hydraulically operated brake actuators

EP 1 916 168 A1 discloses a braking apparatus in which the reliability of the braking force control is ensured even when the battery voltage or power supply line voltage drops.

### SUMMARY

Accordingly, an aspect of the disclosure relates to a technique making it difficult to establish a state in which an actuator controller is inoperable due to a voltage drop caused by an operation of an actuator.

The invention is defined in the claims. In one aspect, an actuator controller as defined in appended claim 1 is provided.

### BRIEF DESCRIPTION OF THE DRAWINGS

The objects, features, advantages, and technical and industrial significance of the present disclosure will be better understood by reading the following detailed description of the embodiments, when considered in connection with the accompanying drawings, in which:
Fig. 1 is a view conceptually illustrating a vehicle brake system including an actuator controller according to a first embodiment;
Fig. 2 is a cross-sectional view of a hydraulic brake of the vehicle brake system;
Fig. 3 is a cross-sectional view of an electric brake of the vehicle brake system;
Fig. 4 is a view conceptually illustrating connection between a vehicle-mounted power source, and each of a brake ECU and a motor ECU of the vehicle brake system;
Fig. 5 is a flowchart representing an actuator control program stored in a storage of the actuator controller;
Fig. 6 is a flowchart representing a portion of the actuator control program (for obtaining the target duty ratio);
Fig. 7 is a flowchart representing another portion of the actuator control program (for obtaining the maximum allowable duty ratio);
Fig. 8 is a map representing a relationship between a usable current and a voltage-drop margin value and stored in the storage;
Fig. 9 is a view illustrating one example of a pump motor by the actuator controller;
Fig. 10 is a view conceptually illustrating a vehicle brake system including an actuator controller according to a second embodiment;
Fig. 11 is a view conceptually illustrating a vehicle brake system including an actuator controller according to a third embodiment; and
Fig. 12 is a view conceptually illustrating another vehicle brake system including an actuator controller to which the present disclosure is applied.

### EMBODIMENTS

Hereinafter, there will be described embodiments of the present invention in each of which a vehicle brake system as one example of a vehicle-installed system includes an actuator controller.

### First Embodiment

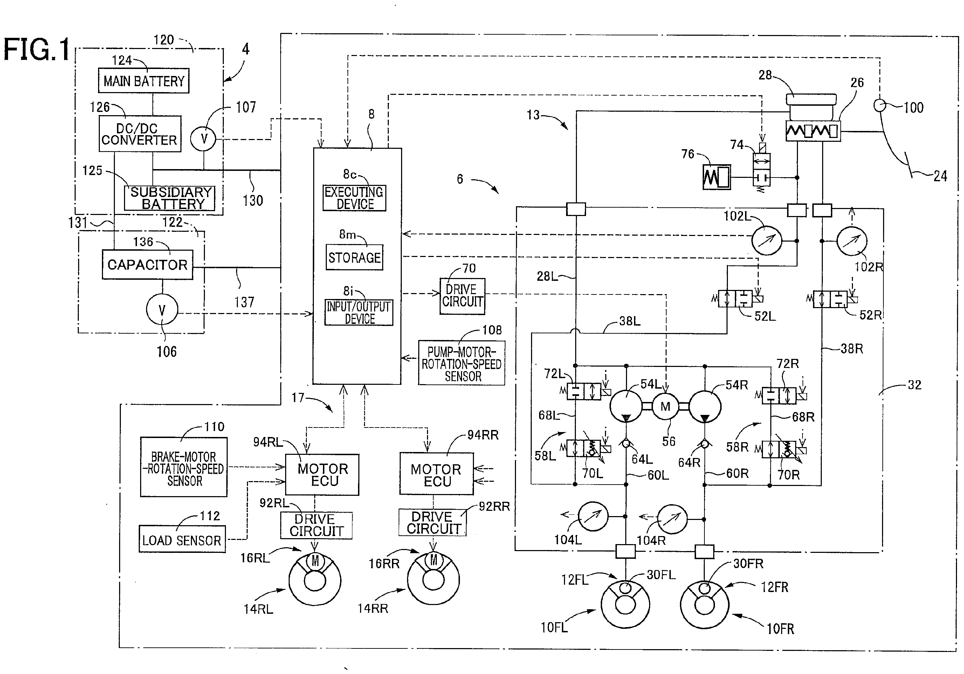

In the first embodiment, as schematically illustrated in Fig. 1, a vehicle brake system includes a vehicle-mounted power source 4, a braking device 6 as one example of a vehicle-mounted device, and a brake ECU 8 configured to control the braking device 6. The braking device 6 includes: a hydraulic-brake line 13 including hydraulic brakes 12FL, 12FR provided respectively for front left and right wheels 10FL, 10FR; and an electric-brake line 17 including electric brakes 16RL, 16RR provided respectively for rear left and right wheels 14RL, 14RR.

The hydraulic-brake line 13 includes: the hydraulic brakes 12FL, 12FR; a master cylinder 26 including a pressurizing piston that is operated in response to movement of a brake pedal 24 as one example a brake operating member operable by a driver; and a hydraulic-pressure control unit 32 provided between (i) the master cylinder 26 and a reservoir 28 and (ii) wheel cylinders 30FL, 30FR for the respective hydraulic brakes 12FL, 12FR.

The master cylinder 26 is of a tandem type in which a hydraulic pressure of a magnitude related to a braking-operation force applied to the brake pedal 24 is produced in two pressure chambers defined in front of respective two pressurizing pistons. Master passages 38L, 38R are connected to the respective two pressure chambers of the master cylinder 26. The two pressure chambers are connected to the respective wheel cylinders 30FL, 30FR via the respective master passages 38L, 38R. In the following description, each of the devices such as the hydraulic brakes 12FL, 12FR and the electric brakes 16RL, 16RR may be referred without a corresponding one of suffixes (FL, FR, RL, RR, L, and R) where the devices are collectively referred or where these devices need not be distinguished by their respective wheel positions, for example.

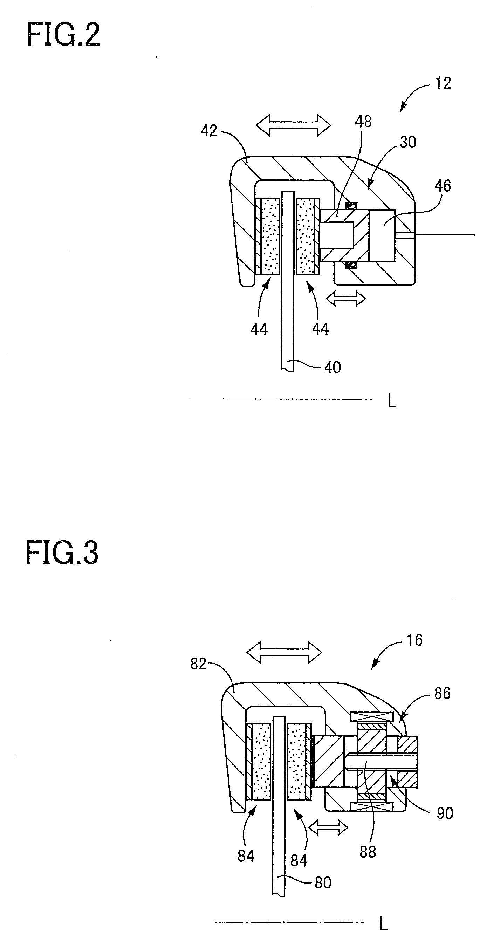

As illustrated in Fig. 2, each of the hydraulic brakes 12 is a disc brake as a friction brake. This hydraulic brake 12 includes: a disc rotor 40 as a brake rotor which is rotated integrally with a corresponding one of the front left and right wheels 10FL, 10FR; a caliper 42 supported by an unrotatable member so as to be movable in a direction parallel with a rotation axis L of the corresponding one of the front left and right wheels 10FL, 10FR; a pair of brake pads 44 as a pair of friction engagement members located on opposite sides of the disc rotor 40; and the wheel cylinder 30 provided inside the caliper 42.

In the case where a hydraulic pressure is supplied to a hydraulic-pressure chamber 46 of the wheel cylinder 30 (noted that the hydraulic pressure in the hydraulic-pressure chamber 46 of the wheel cylinder 30 may be hereinafter referred to simply as "hydraulic pressure in the wheel cylinder 30"), the hydraulic pressure moves a piston 48 and the caliper 42 in the direction parallel with the rotation axis L. The brake pads 44 are pressed against the disc rotor 40 and thereby brought into frictional engagement with the disc rotor 40. That is, the hydraulic brake 12 is actuated. As a result, a hydraulic braking force related to the hydraulic pressure in the wheel cylinder 30 is applied to each of the front left and right wheels 10FL, 10FR.

The hydraulic-pressure control unit 32 includes: master cut-off valves 52L, 52R that are normally-open electromagnetic valves provided at the respective master passages 38L, 38R; a pump passage 60L connecting between a reservoir passage 28L connected to the reservoir 28 and a portion of the master passage 38L which is located downstream of the master cut-off valve 52L; a pump passage 60R connecting between the reservoir passage 28L and a portion of the master passage 38R which is located downstream of the master cut-off valve 52R; two pumps 54L, 54R provided at the respective pump passages 60L, 60R; a pump motor 56 configured to drive the pumps 54L, 54R; and electromagnetic valve devices 58L, 58R provided corresponding to the respective wheel cylinders 30FL, 30FR.

As illustrated in Fig. 1, each of the master passages 38L, 38R directly connects the master cylinder 26 and a corresponding one of the wheel cylinders 30FL, 30FR to each other without passing through the pumps 54L, 54R and the electromagnetic valve devices 58L, 58R. The pump 54L and the wheel cylinder 30FL are connected to each other by the pump passage 60L and the portion of the master passage 38L. The pump 54R and the wheel cylinder 30FR are connected to each other by the pump passage 60R and the portion of the master passage 38R.

Each of the pumps 54L, 54R pumps up the working liquid from the reservoir 28 and pressurizes and supplies the working liquid to a corresponding one of the wheel cylinders 30FL, 30FR. Check valves 64L, 64R are provided on a discharge side of the respective pumps 54L, 54R to prevent backflow of the working fluid to the respective pumps 54L, 54R. In the present embodiment, each of the pumps 54L, 54R is a gear pump which damps pulsation. The pump motor 56 is a brushless motor connected to the brake ECU 8 via an inverter 70 as a drive circuit. The pump motor 56 is controlled by control for the inverter 70 to control operations of the pumps 54L, 54R.

Return passages 68L, 68R are defined such that each of the return passages 68L, 68R connects between (i) a portion of a corresponding one of the pump passages 60L, 60R or a corresponding one of the master passages 38L, 38R, which portion is located on a discharge side of a corresponding one of the pumps 54L, 54R (i.e., the portion located downstream of a corresponding one of the check valves 64L, 64R) and (ii) a portion of the reservoir passage 28L or a corresponding one of the pump passages 60L, 60R, which portion is located on a suction side of the corresponding one of the pumps 54L, 54R. The electromagnetic valve devices 58L, 58R are provided on the respective return passages 68L, 68R. The electromagnetic valve device 58L includes a linear valve 70L as a normally-open electromagnetic valve and a cut-off valve 72L as a normally-closed electromagnetic valve which are provided in series. The electromagnetic valve device 58R includes a linear valve 70R as a normally-open electromagnetic valve and a cut-off valve 72R as a normally-closed electromagnetic valve which are provided in series. For example, each of the cut-off valves 72L, 72R may be provided at a position nearer to the reservoir 28 than the corresponding one of the linear valves 70L, 70R. Continuous control of a current supplied to a solenoid of each of the linear valves 70L, 70R enables continuous control of a hydraulic pressure in a corresponding one of the brake cylinders 30FL, 30FR.

A stroke simulator 76 is connected, via a simulator control valve 74 as a normally-closed electromagnetic valve, to a portion of the master passage 38L which is located upstream of the master cut-off valve 52L. Operations of the stroke simulator 76 are allowed in an open state of the simulator control valve 74.

As illustrated in Fig. 3, each of the electric brakes 16RL, 16RR provided for the respective rear left and right wheels 14RL, 14RR is a disc brake as a friction brake. The electric brake 16 includes a disc rotor 80, a caliper 82, a pair of brake pads 84, a brake motor 86 that is an electric motor provided on the caliper 82, and a screw mechanism 90 as a motion converting mechanism configured to convert rotation of the brake motor 86 to straight movement of a pressing member 88. Rotation of the brake motor 86 moves the pressing member 88 forward in the direction parallel with the rotation axis L, which moves the caliper 82. As a result, the pair of brake pads 84 are pressed against and frictionally engaged with the disc rotor 80. That is, the electric brake 16 is actuated to apply an electric braking force to each of the rear left and right wheels 14RL, 14RR. The brake motors 86RL, 86RR are connected to respective motor ECUs 94RL, 94RR via respective drive circuits 92RL, 92RR and controlled by controls of the respective motor ECUs 94RL, 94RR.

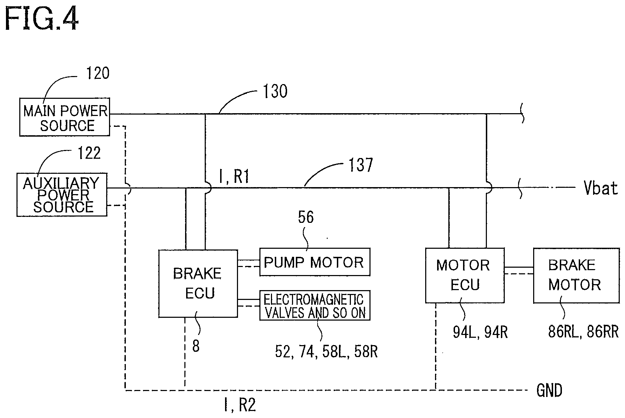

As illustrated in Fig. 4, the vehicle-mounted power source 4 supplies electric power to the braking device 6 (including the pump motor 56, the electromagnetic valves, such as the master cut-off valves 52L, 52R, and the brake motors 86), the brake ECU 8, the motor ECUs 94RL, 94RR, and so on, and includes a main power source 120 and an auxiliary power source 122. As illustrated in Fig. 1, the main power source 120 includes a main battery 124, a subsidiary battery 125, and a DC/DC converter 126. It is noted that Fig. 4 conceptually illustrates a state of connection between the vehicle-mounted power source 4 and each of the braking device 6, the brake ECU 8, and the motor ECUs 94RL, 94RR. In reality, however, the brake ECU 8, the pump motor 56, the electromagnetic valves, and so on are provided integrally with each other as a unit. Likewise, the motor ECU 94RL and the brake motor 86RL are provided integrally with each other as a unit, and the motor ECU 94RR and the brake motor 86RR are provided integrally with each other as a unit. In each of the units, corresponding ones of the pump motor 56, the electromagnetic valves, the brake ECU 8, the brake motors 86, and the motor ECUs 94RL, 94RR are connected to the vehicle-mounted power source 4 in parallel.

In the case where a drive source, not illustrated, of the vehicle includes an electric motor for driving, the main battery 124 supplies electric power to the electric motor for driving. The main battery 124 is charged with electric power generated by a motor generator, not illustrated, in regeneration under braking of the vehicle. In the case where the drive source of the vehicle includes an engine, electric power generated by operation of the engine is supplied to the main battery 124 to charge the main battery 124. The main battery 124 may be constituted by a storage battery such as a lithium-ion storage battery, for example. The main battery 124 may be a battery corresponding to a high voltage of 207 V, for example.

The subsidiary battery 125 may be a lead-acid battery, for example. The subsidiary battery 125 may be a battery corresponding to a low voltage of 12 V, for example. The DC/DC converter 126 lowers the high voltage of 207 V supplied from the main battery 124, to a low voltage of 12 V, for example. The subsidiary battery 125 is charged with the voltage of 12 V obtained by lowering of the high voltage in the DC/DC converter 126. The voltage of 12 V is also supplied to the braking device 6, the brake ECU 8, the motor ECUs 94RL, 94RR, and so on (hereinafter may be referred to as "the braking device 6, the ECUs 8, 94, and so on") via a main electric supply line 130. The auxiliary power source 122 is connected to the DC/DC converter 126 via an electric-charge electric supply line 131. The auxiliary power source 122 includes a capacitor 136. Electric power is supplied from the main power source 120 to the capacitor 136 via the electric-charge electric supply line 131. In the event of failure in the main power source 120, for example, the electric power is supplied from the auxiliary power source 122 to the braking device 6, the ECUs 8, 94, and so on via an auxiliary electric supply line 137.

As illustrated in Fig. 1, each of the brake ECU 8 and the motor ECUs 94RL, 94RR is principally constituted by a computer and includes an executing device 8c, a storage 8m, and an input/output device 8i. It is noted that illustration of the executing device and so on of the motor ECU 94 is omitted. The brake ECU 8 and each of the motor ECUs 94RL, 94RR are communicable with each other.

Devices connected to the input/output device of the brake ECU 8 include: a stroke sensor 100 configured to detect a stroke of the brake pedal 24; master-cylinder-pressure sensors 102L, 102R configured to detect hydraulic pressures in the respective two pressure chambers of the master cylinder 26; wheel-cylinder-pressure sensors 104L, 104R configured to detect hydraulic pressures in the respective wheel cylinders 30FL, 30FR; an auxiliary voltage sensor 106 as one example of a source-voltage obtainer configured to detect a voltage of the auxiliary power source 122; a main voltage sensor 107 configured to detect a voltage of the main power source 120; a pump-motor-rotation-speed sensor 108 configured to detect a rotation speed of the pump motor 56; and the hydraulic-pressure control unit 32. In the present embodiment, the main voltage sensor 107 detects a voltage of the subsidiary battery 125.

Devices connected to the input/output device of the motor ECU 94 include: a brake-motor-rotation-speed sensor (a resolver) 110 configured to detect a rotation speed of the brake motor 86; a load sensor 112 configured to detect a load which is an axial-direction force applied to the pressing member 88; and the drive circuits 92RL, 92RR for the respective brake motors 86RL, 86RR.

There will be next described operations of the brake system configured as described above. A brake request is output in the case where the brake pedal 24 is depressed, for example. The brake ECU 8 obtains an operation state of the brake pedal 24 (hereinafter may be referred to as "braking-operation state") based on at least one of a value detected by the stroke sensor 100 and values detected by the master-cylinder-pressure sensors 102L, 102R. The brake ECU 8 based on the braking-operation state calculates a requested total braking force that is requested by the driver. In other words, when the brake pedal 24 is depressed, the brake request is output, and the requested total braking force is calculated based on the brake request. In autonomous vehicles, a brake request is output based on environments around an own vehicle, and a requested total braking force is calculated based on the brake request, i.e., the environments around the own vehicle.

For example, in the case where the drive source of the vehicle includes an electric motor, and a regenerative braking force is applied to the drive wheel, a requested electric braking force and a requested hydraulic braking force are obtained so as to satisfy the requested total braking force by at least one of the regenerative braking force, an electric braking force, and a hydraulic braking force, and a requested load Ft and a requested hydraulic pressure Pt are calculated based on the requested electric braking force and the requested hydraulic braking force. In contrast, in the case where no regenerative braking force is applied to the drive wheel (e.g., the case where the vehicle does not include an electric motor serving as a drive source or the case where the vehicle includes the electric motor serving as the drive source, but no regenerative braking force is applied), the requested load Ft, the requested hydraulic pressure Pt, and so on are calculated such that the requested total braking force is satisfied by at least one of the electric braking force and the hydraulic braking force. Thus, there are three cases for the requested electric braking force and the requested hydraulic braking force: the case where each of the requested electric braking force and the requested hydraulic braking force is determined to a value greater than zero; the case where one of the requested electric braking force and the requested hydraulic braking force is determined to zero; and the case where each of the requested electric braking force and the requested hydraulic braking force is determined to zero.

The brake ECU 8 directly controls the hydraulic-pressure control unit 32 and outputs information relating to control of the brake motor 86, to the motor ECUs 94RL, 94RR. In the case where the requested hydraulic pressure Pt is the same between the wheel cylinders 30FL, 30FR for the respective front left and right wheels 10FL, 10FR, the hydraulic-pressure control unit 32 supplies currents to solenoids of the master cut-off valves 52L, 52R and the simulator control valve 74 to close the master cut-off valves 52L, 52R and open the simulator control valve 74. In this state, the pumps 54L, 54R are similarly operated by the pump motor 56. The hydraulic pressure of the same magnitude is supplied to the wheel cylinders 30FL, 30FR. The hydraulic pressures in the respective wheel cylinders 30FL, 30FR are controlled by control of the pump motor 56. In this case, no current is usually supplied to the electromagnetic valve devices 58L, 58R.

In the case where the requested hydraulic pressure Pt is different between the wheel cylinders 30FL, 30FR in, e.g., anti-lock control, in contrast, the hydraulic-pressure control unit 32 supplies currents to the solenoids of the master cut-off valves 52L, 52R and the simulator control valve 74 to close the master cut-off valves 52L, 52R and open the simulator control valve 74. In this state, the pumps 54L, 54R are similarly operated by the pump motor 56. Furthermore, the hydraulic-pressure control unit 32 supplies currents to solenoids of the cut-off valves 72L, 72R to open the cut-off valves 72L, 72R and in this state controls currents to be supplied to the solenoids of the linear valves 70L, 70R. The linear valves 70L, 70R are individually controlled to individually control the hydraulic pressures in the respective wheel cylinders 30FL, 30FR using a pressure of discharge of each of the pumps 54L, 54R. In this case, currents are also supplied to the electromagnetic valve devices 58L, 58R.

In the event of a malfunction in which no electric power is supplied from the main power source 120 to the braking device 6, the ECUs 8, 94, and so on, for example, when the voltage of the main power source 120 becomes less than a predetermined malfunction determination voltage, electric power of the main power source 120 is not supplied to the braking device 6, the ECUs 8, 94, and so on, and the auxiliary power source 122. In the event of a malfunction such as a break in the main electric supply line 130, electric power of the main power source 120 is supplied to the auxiliary power source 122 but is not supplied to the braking device 6, the ECUs 8, 94, and so on. In these cases, electric power is supplied from the auxiliary power source 122 to the braking device 6, the ECUs 8, 94, and so on. In the latter case, electric power is supplied from the main power source 120 to the auxiliary power source 122 via the electric-charge electric supply line 131 to charge the capacitor 136, but the speed of the charge is slow, so that the voltage of the auxiliary power source 122 lowers with operation of the braking device 6.

As illustrated in Fig. 4, a voltage obtained by subtracting a magnitude corresponding to a voltage drop in a wire from a voltage Vbat of the auxiliary power source 122 is applied to the brake ECU 8 and the motor ECUs 94RL, 94RR. The magnitude corresponding to the voltage drop in the wire is calculated by multiplying a flowing current I by a well-known resistance R (IR). Thus, in the case where an inrush current flows in each of the pump motor 56 and the brake motor 86, the magnitude corresponding to the voltage drop increases transiently, so that the voltage applied to the brake ECU 8 and the motor ECUs 94RL, 94RR lowers transiently. In the case where the voltage applied to the brake ECU 8 and the motor ECUs 94RL, 94RR is less than a lowest operation voltage Vlow that is a voltage required for operations of the brake ECU 8 and the motor ECUs 94RL, 94RR, there is a possibility that the brake ECU 8 and the motor ECUs 94RL, 94RR become inoperable, making it impossible to control the braking device 6. It is noted that the lowest operation voltage for the brake ECU 8 and the motor ECUs 94RL, 94RR connected to the vehicle-mounted power source 4 is determined to a higher one of the lowest voltage required for an operation of the brake ECU 8 and the lowest voltage required for operations of the motor ECUs 94RL, 94RR.

To solve the problem, the present embodiment makes it difficult to establish a state in which the brake ECU 8 and the motor ECUs 94RL, 94RR become inoperable due to operations of the pump motor 56, the brake motor 86, and/or the like. Also, operations of the pump motor 56 and the brake motor 86 are restricted such that a voltage drop caused due to operations of the pump motor 56 and/or the brake motor 86 does not exceed a value (a voltage-drop margin value) ΔV obtained by subtracting the lowest operation voltage Vlow for the brake ECU 8 and the motor ECUs 94RL, 94RR from the voltage Vbat of the auxiliary power source 122.

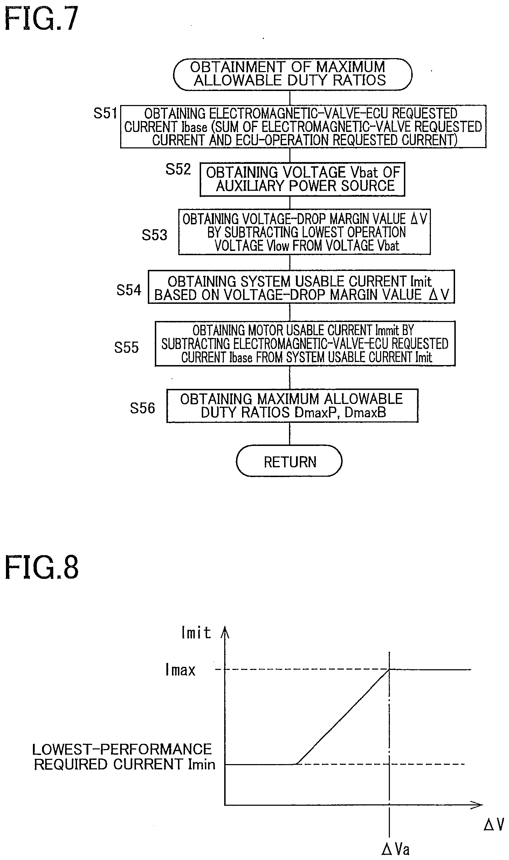

Specifically, the voltage-drop margin value ΔV is obtained by subtracting the lowest operation voltage Vlow from the voltage Vbat of the auxiliary power source 122. A usable current (that may be referred to as "system usable current") Imit suppliable from the auxiliary power source 122 to the braking device 6 and the ECUs 8, 94, and so on and usable for the braking device 6 and the ECUs 8, 94, and so on is obtained based on the voltage-drop margin value ΔV. According to the map in Fig. 8, the system usable current Imit is determined to a value that is greater in the case where the voltage-drop margin value ΔV is large than in the case where the voltage-drop margin value ΔV is small. Specifically, in the case where the voltage-drop margin value ΔV is greater than a set value ΔVa, the system usable current Imit is determined to an upper limit value Imax, and in the case where the voltage-drop margin value ΔV is less than or equal to the set value ΔVa, the system usable current Imit is determined to a value less than the upper limit value Imax.

It is noted that, even in the case where the voltage-drop margin value ΔV is equal to zero, the system usable current Imit is determined to a lowest-performance required current Imin greater than zero. The lowest-performance required current Imin is a current required for the braking device 6 to perform minimum operations. If the voltage-drop margin value ΔV is small, and the lowest-performance required current Imin is supplied, a voltage applied to the ECUs 8, 94 and so on is in some cases less than or equal to the lowest operation voltage Vlow, leading to a situation in which the ECUs 8, 94 and so on are inoperable. In this case, a manualoperating state is established, and the hydraulic brake 12 is actuated by a hydraulic pressure produced by the master cylinder 26.

In the case where a plurality of ECUs, such as the brake ECU 8 and the motor ECU 94, are connected to the vehicle-mounted power source 4, as described above, the lowest operation voltage Vlow is determined to a higher one of the lowest operation voltage for the brake ECU 8 and the lowest operation voltage for the motor ECU 94. If the actual lowest operation voltage for the brake ECU 8 is less than the lowest operation voltage for the motor ECU 94, even in the case where the lowest-performance required current Imin is supplied when the voltage-drop margin value ΔV is equal to zero, the voltage applied to the brake ECU 8 is greater than the lowest operation voltage for the brake ECU 8 in some cases. In view of the above, in the case where the voltage-drop margin value ΔV is equal to zero, the system usable current Imit is determined to the lowest-performance required current Imin greater than zero, making it possible for the brake ECU 8 and the motor ECU 94 to control the braking device 6 as possible.

An electromagnetic-valve requested current is obtained which is the sum of currents requested by a plurality of electromagnetic valves provided in the hydraulic-brake line 13. In the case where the requested hydraulic pressure Pt is the same between the wheel cylinders 30FL, 30FR as described above, the sum of currents to be supplied to the solenoids of the master cut-off valves 52L, 52R and the simulator control valve 74 as electromagnetic valves is obtained as the electromagnetic-valve requested current. In the case where currents are always supplied to the solenoids of the master cut-off valves 52L, 52R and the simulator control valve 74, the sum of measured values of the respective currents flowing through these solenoids is determined to the electromagnetic-valve requested current. Strictly, while the sum of the measured values of the respective currents is an electromagnetic-valve operating current, it is possible to consider that the electromagnetic-valve operating current is the electromagnetic-valve requested current in a broad sense.

In the case where the requested hydraulic pressure Pt is different between the wheel cylinders 30FL, 30FR, the sum of the currents to be supplied to the solenoids of the master cut-off valves 52L, 52R, the simulator control valve 74, the cut-off valves 72L, 72R, and the linear valves 70L, 70R as the electromagnetic valves is obtained as the electromagnetic-valve requested current. The currents to be supplied to the solenoids of the respective linear valves 70L, 70R are determined based on the requested hydraulic pressure Pt.

An ECU-operation requested current is obtained which is the sum of currents required for the brake ECU 8 and the motor ECUs 94RL, 94RR to operate, respectively. An electromagnetic-valve-ECU requested current Ibase is obtained which is the sum of the electromagnetic-valve requested current and the ECU-operation requested current.

A motor usable current Immit usable for the pump motor 56 and the brake motor 86 is obtained based on a value obtained by subtracting the electromagnetic-valve-ECU requested current Ibase from the system usable current Imit. A pump-motor usable current ImmitP usable for the pump motor 56 and a brake-motor usable current ImmitB usable for the electric brake 16 are calculated based on the motor usable current Immit.

The motor usable current Immit may be distributed to the pump-motor usable current ImmitP and the brake-motor usable current ImmitB based on a ratio between the requested hydraulic braking force and the requested electric braking force and may be distributed to the pump-motor usable current ImmitP and the brake-motor usable current ImmitB at a predetermined ratio, for example. It is noted that the pump motor 56 and the brake motor 86 may be configured such that operations of the pump motor 56 and the brake motor 86 are not started at the same time.

A maximum allowable duty ratio DmaxP at which a current is suppliable to the pump motor 56 is obtained based on the pump-motor usable current ImmitP. A maximum allowable duty ratio DmaxB at which a current is suppliable to the brake motor 86 is obtained based on the brake-motor usable current ImmitB.

An actual hydraulic pressure P in the wheel cylinder 30 and an actual load F applied to the pressing member 88 of the electric brake 16 are measured. Requested operating states are obtained to bring the actual hydraulic pressure P and the actual load F closer to the requested hydraulic pressure Pt and the requested load Ft, respectively. The requested operating states are operating states requested respectively for the pump motor 56 and the brake motor 86. Requested duty ratios are obtained to establish the requested operating states of the pump motor 56 and the brake motor 86. The requested duty ratios are duty ratios of supply currents which are requested respectively for the pump motor 56 and the brake motor 86.

Specifically, a supply liquid amount requested for the actual hydraulic pressure Ps to be brought closer to the requested hydraulic pressure Pt is obtained, and a requested pump-motor rotation speed NtP which is a rotation speed of the pump motor 56 is obtained as the requested operating state. Also, an amount of forward movement which is requested for the actual load Fs to be brought closer to the requested load Ft, and a requested brake-motor rotation speed NtB which is a rotation speed of the brake motor 86 is obtained as the requested operating state. A requested duty ratio DtP that is a duty ratio of a supply current requested by the pump motor 56 is obtained based on an actual rotation speed NsP of the pump motor 56 and the requested pump-motor rotation speed NtP. A requested duty ratio DtB that is a duty ratio of a supply current requested by the brake motor 86 is obtained based on an actual rotation speed NsB of the brake motor 86 and the requested brake-motor rotation speed NtB.

The requested duty ratios DtP, DtB and the maximum allowable duty ratios DmaxP, DmaxB are compared with each other, respectively. In the case where the requested duty ratio DtP is less than or equal to the maximum allowable duty ratio DmaxP, a control duty ratio DP* that is a duty ratio of a current to be supplied to the pump motor 56 is determined to the requested duty ratio DtP. Even in the case where a current of the requested duty ratio DtP is supplied, it is difficult for the voltage applied to the brake ECU 8 and the motor ECU 94 to be less than the lowest operation voltage due to the voltage drop caused due to operation of the pump motor 56.

In the case where the requested duty ratio DtP is greater than the maximum allowable duty ratio DmaxP, in contrast, the duty ratio DP* for control of the pump motor 56 is determined to a value less than the requested duty ratio DtP, e.g., the maximum allowable duty ratio DmaxP. This is because, in the case where the current of the requested duty ratio DtP is supplied to the pump motor 56, there is a possibility that the voltage applied to the brake ECU 8 and the motor ECU 94 becomes less than the lowest operation voltage by a voltage drop caused due to operation of the pump motor 56.

Similar processings are executed for the brake motor 86. That is, the requested duty ratio DtB and the maximum allowable duty ratio DmaxB are compared with each other, and a control duty ratio DB* is determined to the requested duty ratio DtB or the maximum allowable duty ratio DmaxB.

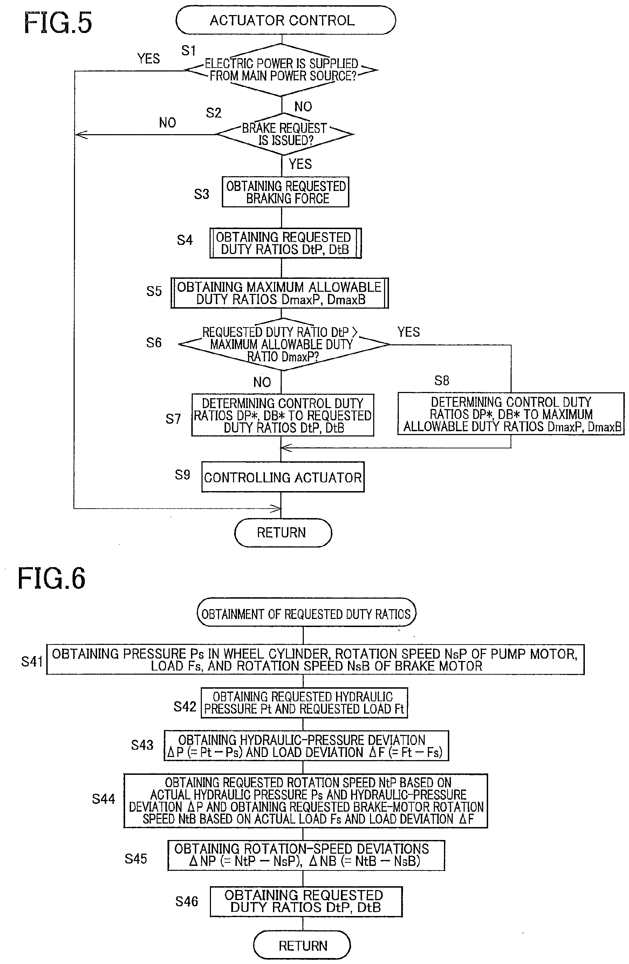

The flowchart in Fig. 5 represents one example of an actuator control program. The present program is executed each time when a set length of time is elapsed. At S1, it is determined, based on, e.g., the voltage of the main power source 120 which is detected by the main voltage sensor 107, whether the vehicle brake system is in a state in which electric power is supplied from the main power source 120 to the braking device 6, the ECUs 8, 94, and so on. It is determined at S2 whether the brake request is issued. When a positive decision (YES) is made at S1 or when negative decisions (NO) are made at S1 and S2, processings at S3 and subsequent steps are not executed.

When a negative decision (NO) is made at S1, and a positive decision (YES) is made at S2, the requested total braking force is obtained at S3 based on the brake request as described above. At S4, the requested duty ratios are obtained for the pump motor 56 and the brake motor 86, respectively. At S5, the maximum allowable duty ratios are obtained for the pump motor 56 and the brake motor 86, respectively.

There will be described obtainment of the requested duty ratios at S4 with reference to the flowchart in Fig. 6. At S41, the actual hydraulic pressure Ps in the wheel cylinder 30 and the actual rotation speed NsP of the pump motor 56 are detected by the wheel-cylinder-pressure sensor 104 and the pump-motor-rotation-speed sensor 108, respectively, and the actual load Fs of the electric brake 16 and the actual rotation speed NsB of the brake motor 86 are detected by the load sensor 112 and the brake-motor-rotation-speed sensor 110, respectively. At S42, the requested hydraulic braking force and the requested electric braking force are obtained based on the requested total braking force, and the requested hydraulic pressure Pt and the requested load Ft are obtained. At S43, a hydraulic-pressure deviation ΔP (= Pt - Ps) and a load deviation ΔF (= Ft - Fs) are obtained. At S44, the requested pump-motor rotation speed NtP as the requested operating state of the pump motor 56 is obtained based on the actual hydraulic pressure Ps in the wheel cylinder 30, the hydraulic-pressure deviation ΔP, and so on. Furthermore, the requested brake-motor rotation speed NtB is obtained based on the actual load Fs, the load deviation ΔF, and so on. At S45, rotation-speed deviations ΔNP (= NtP - NsP), ΔNB (= NtB - NsB) are obtained. At S46, the requested duty ratios DtP, DtB respectively for the pump motor 56 and the brake motor 86 are obtained based on the rotation-speed deviations ΔNP, ΔNB.

There will be described obtainment of the maximum allowable duty ratios at S5 with reference to the flowchart in Fig. 7. At S51, the electromagnetic-valve-ECU requested current Ibase is obtained. At S52, the voltage Vbat of the auxiliary power source 122 is detected by the auxiliary voltage sensor 106. Since there is a malfunction in the main power source 120, the voltage Vbat of the auxiliary power source 122 is obtained as the voltage of the vehicle-mounted power source 4. At S53, the voltage-drop margin value ΔV is obtained by subtracting the lowest operation voltage Vlow from the voltage Vbat. At S54, the system usable current Imit is obtained based on the voltage-drop margin value ΔV according to the map in Fig. 8.

At S55, the motor usable current Immit is obtained by subtracting the electromagnetic-valve-ECU requested current Ibase from the system usable current Imit. The pump-motor usable current ImmitP and the brake-motor usable current ImmitB are obtained based on the motor usable current Immit. At S56, the maximum allowable duty ratios DmaxP, DmaxB respectively for the pump motor 56 and the brake motor 86 are obtained based on the pump-motor usable current ImmitP and the brake-motor usable current ImmitB.

Processings at S6 and subsequent steps are executed thereafter. In the present embodiment, the processings at S6-S8 are executed for each of the pump motor 56 and the brake motor 86, but the flowchart in Fig. 5 represents processings for both of the pump motor 56 and the brake motor 86 for simplicity.

At S6, it is determined whether the requested duty ratio DtP is greater than the maximum allowable duty ratio DmaxP for the pump motor 56. When a negative decision (NO) is made at S6, the control duty ratio DP* is determined to the requested duty ratio DtP at S7. When a positive decision (YES) is made at S6, the control duty ratio DP* is determined to the maximum allowable duty ratio DmaxP at S8.

Likewise, it is determined at S6 whether the requested duty ratio DtB is greater than the maximum allowable duty ratio DmaxB for the brake motor 86. When a negative decision (NO) is made at S6, the control duty ratio DB* is determined to the requested duty ratio DtB at S7. When a positive decision (YES) is made at S6, the control duty ratio DB* is determined to the maximum allowable duty ratio DmaxB at S8.

At S9, the pump motor 56 and the plurality of electromagnetic valves are controlled, and information such as the control duty ratio DB* for the brake motor 86 is output to the motor·ECU 94. Currents of the control duty ratios DP*, DB* are supplied to the pump motor 56 and the brake motor 86, respectively.

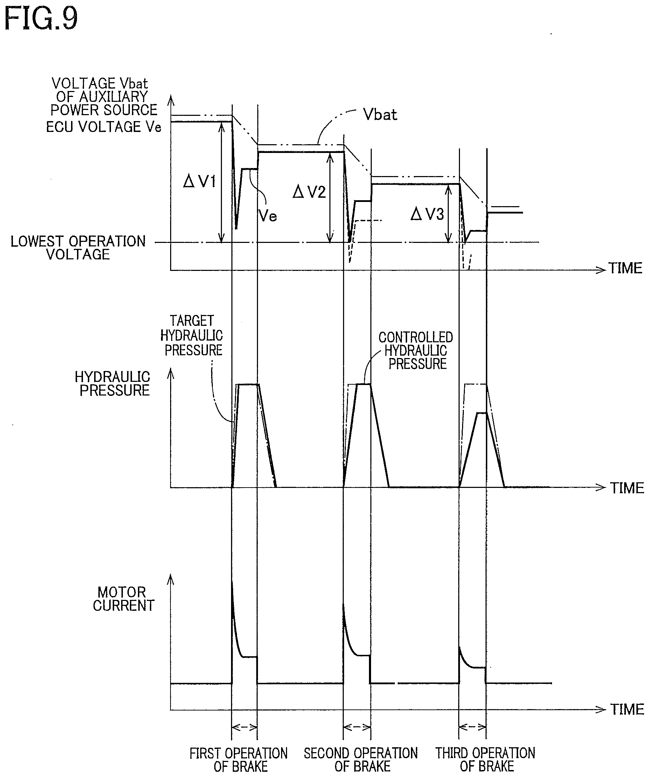

Fig. 9 represents changes of the voltage Vbat of the auxiliary power source 122 and an ECU voltage Ve as a voltage applied to the brake ECU 8 in the case where no current is supplied from the main power source 120 to the braking device 6, the ECUs 8, 94, and the auxiliary power source 122 due to a malfunction in the main power source 120 and in the case where the requested hydraulic braking force is greater than zero, and the requested electric braking force is equal to zero. The voltage Vbat of the auxiliary power source 122 decreases with increase in the number of operations of the brake. Thus, in a conventional brake system, an inrush current at the second or third start of operation of the pump motor 56 in some cases makes the ECU voltage Ve transiently less than the lowest operation voltage Vlow, which may make the brake ECU 8 inoperable.

In the present embodiment, in contrast, even in the case where the voltage-drop margin value ΔV decreases by decrease in the voltage of the auxiliary power source 122 at the second or third start of operation of the pump motor 56, an operation of the pump motor 56 at its start is restricted to reduce the inrush current. This reduces lowering of the ECU voltage Ve, making it difficult for the ECU voltage Ve to become lower than the lowest operation voltage Vlow. At the start of the second braking operation, the control duty ratio DP* for the pump motor 56 is made less than the requested duty ratio DtP to reduce the inrush current. At the start and in a normal state of the third braking operation, the control duty ratio DP* is made less than the requested duty ratio DtP to reduce both of the inrush current and a current in the steady state. Thus, it is possible to well avoid a situation in which the ECU voltage Ve becomes less than the lowest operation voltage Vlow.

In the present embodiment as described above, each of the master cut-off valves 52L, 52R, the simulator control valve 74, the cut-off valves 72L, 72R, the linear valves 70L, 70R, and so on is one example of a first actuator. Each of the pump motor 56 and the brake motor 86 is one example of a second actuator. Portions of the brake ECU 8 which store and execute the actuator control program constitute the actuator controller and a vehicle-mounted-device controller, for example.

Portions of the brake ECU 8 which store and execute the processing at S53 in the actuator control program constitute a voltage-drop-margin-value obtainer, for example. Portions of the brake ECU 8 which store and execute the processing at S54 constitute a usable-current obtainer and a system-usable-current obtainer, for example. Portions of the brake ECU 8 which store and execute a portion of the processing at S51 which obtains the electromagnetic-valve requested current constitute a total-first-requested-current obtainer, for example. Portions of the brake ECU 8 which store and execute the processing at S55 constitute a second usable-current obtainer, for example. Portions of the brake ECU 8 which store and execute the processing at S56 constitute a maximum-allowable-duty-ratio obtainer, for example.

Portions of the brake ECU 8 which store and execute the processing at S46 constitute a second requested-current obtainer, a requested-duty-ratio obtainer, and a second-operation-start-requested-current obtainer, for example. Portions of the brake ECU 8 which store and execute the processings at S6-S8 constitute an operation restrictor, an inrush-current restrictor, and a duty-ratio restrictor, for example. Portions of the brake ECU 8 which store and execute the processing at S1 constitute a main-power-supply-state obtainer, for example. In the present embodiment, a second usable current corresponds to the maximum allowable duty ratio. Each of a second requested current and a second operation-start requested current correspond to the requested duty ratios. The sum of first requested currents correspond to the electromagnetic-valve requested current. The usable current may be referred to as the system usable current.

### Second Embodiment

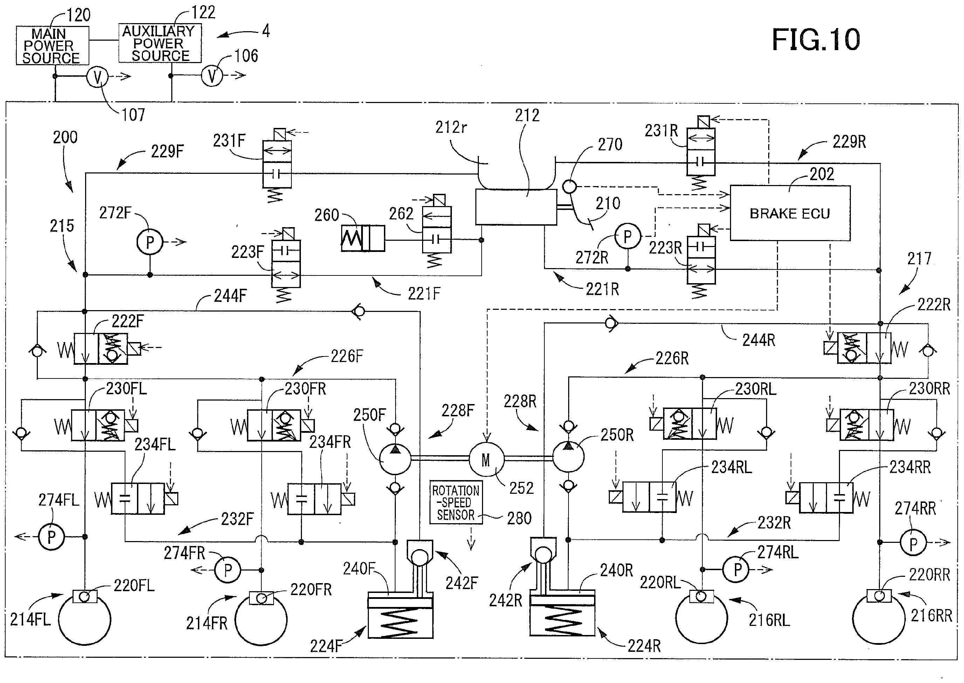

The present disclosure may be applied to a vehicle brake system illustrated in Fig. 10. The present vehicle brake system includes a braking device 200, a brake ECU 202, and the vehicle-mounted power source 4. The braking device 200 has front and rear lines, specifically, the braking device 200 has: a front-wheel brake line 215 connected to one of two pressure chambers of a master cylinder 212 and including hydraulic brakes 214FL, 214FR provided for the respective front left and right wheels; and a rear-wheel brake line 217 connected to the other of the two pressure chambers and including hydraulic brakes 216RL, 216RR provided for the respective rear left and right wheels. The same hydraulic pressure related to an operation of a brake pedal 210 is produced in the two pressure chambers of the master cylinder 212. Since the front-wheel brake line 215 and the rear-wheel brake line 217 have substantially the same configuration, only the front-wheel brake line 215 will be explained. When indicating components in the rear-wheel brake line 217, the suffix R is added instead of "F" indicating components in the front-wheel brake line 215.

The front-wheel brake line 215 includes: a master passage 221F connecting between the one of the pressure chambers of the master cylinder 212 and each of wheel cylinders 220FL, 220FR for the respective hydraulic brakes 214FL, 214FR; a master cut-off valve 223F and a pressure-differential control valve 222F that are normally-open electromagnetic valves provided in the master passage 221F in series; a pump passage 226F connecting between a pressure reduction reservoir 224F and a portion of the master passage 221F which is located downstream of the pressure-differential control valve 222F; a pump unit 228F provided in the pump passage 226F; a reservoir passage 229F connecting between a master reservoir 212r and a portion of the master passage 221F which is located between the master cut-off valve 223F and a pressure-differential control valve 220F; and a communication control valve 231F that is a normally-closed electromagnetic valve provided in the reservoir passage 229F. Pressure holding valves 230FL, 230FR that are normally-open electromagnetic valves corresponding to the respective wheel cylinders 220FL, 220FR are provided at positions located downstream of a portion of the master passage 221F to which the pump passage 226F is connected. Normally-closed electromagnetic valves in the form of pressure reduction valves 234FL, 234FR are provided in a pressure reduction passage 232F connecting between the pressure reduction reservoir 224F and each of the wheel cylinders 220FL, 220FR.

The pressure reduction reservoir 224F includes a working-liquid storage chamber 240F and a replenishment valve 242F. The pressure reduction passage 232F is connected to the working-liquid storage chamber 240F, and a replenishment passage 244F is connected to the replenishment valve 242F. The replenishment passage 244F is connected to a portion of the master passage 221F which is located between the pressure-differential control valve 222F and the master cut-off valve 223F (the portion of the master passage 221F which is located downstream of a portion of the master passage 221F to which the reservoir passage 229F is connected in the present embodiment). The replenishment valve 242F is in a closed state in the case where an amount of the working liquid stored in the working-liquid storage chamber 240F is greater than a set liquid amount. When the amount of the working liquid stored in the working-liquid storage chamber 240F becomes less than the set liquid amount, the replenishment valve 242F is switched to an open state. In the case where the replenishment valve 242F and the communication control valve 231F are open, the working liquid in the master reservoir 212r is supplied to the working-liquid storage chamber 240F via the replenishment passage 244F.

Each of the pressure holding valves 230FL, 230FR is configured to continuously control a pressure differential between (i) a hydraulic pressure on an upstream side of each of the pressure holding valves 230FL, 230FR (on a side of each of the pressure holding valves 230FL, 230FR on which the pump passage 226F is connected to the master passage 221F) and (ii) a hydraulic pressure on a downstream side of each of the pressure holding valves 230FL, 230FR (on a side of each of the pressure holding valves 230FL, 230FR on which a corresponding one of the wheel cylinders 220FL, 220FR is provided). The pressure differential that is a value obtained by subtracting the hydraulic pressure on the downstream side from the hydraulic pressure on the upstream side is controlled to a value related to currents supplied to the solenoids of the pressure holding valves 230FL, 230FR. In the case where a hydraulic pressure in each of the wheel cylinders 220FL, 220FR is made less than a discharge pressure of the pump unit 228F, the pressure differential is controlled by control of a current supplied to the solenoid of a corresponding one of the pressure holding valves 230.

The pressure-differential control valve 222F is configured to continuously control a pressure differential between a hydraulic pressure on an upstream side of the pressure-differential control valve 222F and a hydraulic pressure on a downstream side of the pressure-differential control valve 222F. The pressure differential that is a value obtained by subtracting the hydraulic pressure on the upstream side (the hydraulic pressure on a side of the pressure-differential control valve 222F on which the master reservoir 212r is provided) from the hydraulic pressure on the downstream side (the hydraulic pressure at a portion of the master passage 221F to which the pump passage 226F is connected) is controlled to a value related to a current supplied to the solenoid of the pressure-differential control valve 222F. For example, the pressure-differential control valve 222F controls the discharge pressure of the pump unit 228F, thereby controlling the hydraulic pressure in the wheel cylinder 220.

The pump unit 228F includes a pump 250F and a pump motor 252 configured to drive the pump 250F. The pump motor 252 is shared between the pump unit 228F and a pump unit 228R provided in the rear-wheel brake line 217.

A stroke simulator 260 is connected to the master passage 221F via a normally-closed electromagnetic valve in the form of a simulator control valve 262. The stroke simulator 260 is not provided in the rear-wheel brake line 217.

The brake ECU 202 is principally constituted by a computer and includes an executing device, a storage, and an input/output device, not illustrated. Devices connected to the brake ECU 202 include: a stroke sensor 270 configured to detect a stroke of the brake pedal 210; master-cylinder-pressure sensors 272F, 272R configured to detect the hydraulic pressures in the respective pressure chambers of the master cylinder 212; wheel-cylinder-pressure sensors 274FL, 274FR, 274RL, 274RR configured to detect the hydraulic pressures in the respective wheel cylinders 220; the auxiliary voltage sensor 106 configured to detect the voltage of the auxiliary power source 122; the main voltage sensor 107 configured to detect the voltage of the main power source 120; and a rotation-speed sensor 280 configured to detect a rotation speed of the pump motor 252. The pump motor 252 is connected to the brake ECU 202 via a drive circuit, not illustrated. The solenoids of the plurality of electromagnetic valves (e.g., the master cut-off valves 223, the pressure-differential control valves 222, the pressure holding valves 230, the simulator control valve 262, and the communication control valves 231) are connected to the brake ECU 202, for example.

Electric power is supplied from the vehicle-mounted power source 4 to the braking device 200 and the brake ECU 202. The vehicle-mounted power source 4 is similar to the vehicle-mounted power source in the above-described embodiment.

In the vehicle brake system configured as described above, in the case where a brake request is output, currents are supplied to the solenoids of the communication control valves 231F, 231R, the master cut-off valves 223F, 223R, and the simulator control valve 262 to open the communication control valves 231F, 231R, close the master cut-off valves 223F, 223R, and open the simulator control valve 262. In this state, the pump motor 252 actuates the pumps 250F, 250R.

In the case where the requested hydraulic pressures Pt for the wheel cylinders 220 of the respective front left and right and rear left and right wheels are equal to each other, the pump motor 252 and the pressure-differential control valves 222F, 222R are controlled to control the hydraulic pressures in the respective wheel cylinders 220 to the same magnitude. The electromagnetic-valve requested current is obtained based on, e.g., currents supplied to the solenoids of the communication control valves 231F, 231R, the master cut-off valves 223F, 223R, the pressure-differential control valves 222F, 222R, and the simulator control valve 262, for example. The hydraulic pressure of the working liquid discharged from each of the pumps 250 is controlled by a corresponding one of the pressure-differential control valves 222 and supplied to corresponding ones of the wheel cylinders 220.

In the case where the requested hydraulic pressures Pts for the respective wheel cylinders 220 are different from each other, currents to be supplied to the solenoids of the respective pressure holding valves 230 are controlled individually to control the hydraulic pressures in the respective wheel cylinders individually. The currents to be supplied to the solenoids of the respective pressure holding valves 230 are determined based on the requested hydraulic pressures Pt for the respective wheel cylinders 220. Strictly, the current to be supplied to the solenoid of each of the pressure holding valves 230 is determined based on a difference between a hydraulic pressure obtained by controlling the discharge pressure of a corresponding one of the pumps 250 by a corresponding one of the pressure-differential control valves 222 and the requested hydraulic pressure Pt for a corresponding one of the wheel cylinders 220, but in the case where the discharge pressures of the respective pumps 250 (strictly, the hydraulic pressures controlled by the respective pressure-differential control valves 222) are substantially equal to each other, it is possible to consider that the currents to be supplied to the solenoids of the respective pressure holding valves 230 are determined based on the requested hydraulic pressures Pt for the respective wheel cylinder 220. The electromagnetic-valve requested current is obtained based on (i) currents to be supplied to the solenoids of the communication control valves 231F, 231R, the master cut-off valves 223F, 223R, the pressure-differential control valves 222F, 222R, the simulator control valve 262, and so on and (ii) currents requested by the pressure holding valves 230.

As in the case in the above-described embodiment, the voltage-drop margin value ΔV is obtained by subtracting the lowest operation voltage Vlow from the voltage Vbat of the auxiliary power source 122, and the system usable current Imit is obtained based on the voltage-drop margin value ΔV. While the motor usable current Immit is obtained based on a value obtained by subtracting the electromagnetic-valve-ECU requested current Ibase from the system usable current Imit, the motor usable current Immit is determined to the pump-motor usable current (Immit = ImmitP) in the present embodiment. Thereafter, as in the above-described embodiment, in the case where the maximum allowable duty ratio DmaxP determined based on the pump-motor usable current ImmitP is greater than the requested duty ratio DtP requested by the pump motor 56, operations of the pump motor 56 are restricted.

This reduces a transient voltage drop caused by the inrush current, making it difficult to establish a state in which the brake ECU 202 is inoperable. In the event of a shortage of the working liquid in the pressure reduction reservoir 224, the working liquid is supplied via the master reservoir 212r, the reservoir passage 229, and the replenishment passage 244, and the hydraulic pressure output from the pressure-differential control valve 222 is returned to the master reservoir 212r via the reservoir passage 229. In the present embodiment, in the event of a shortage of the working liquid in the pressure reduction reservoir 224, the working liquid is not the supplied from the master cylinder 212, and the hydraulic pressure output from the pressure-differential control valve 222 is not returned to the master cylinder 212. This reduces an excessive travel and a kickback of the brake pedal 210, thereby reducing discomfort of the driver.

### Third Embodiment

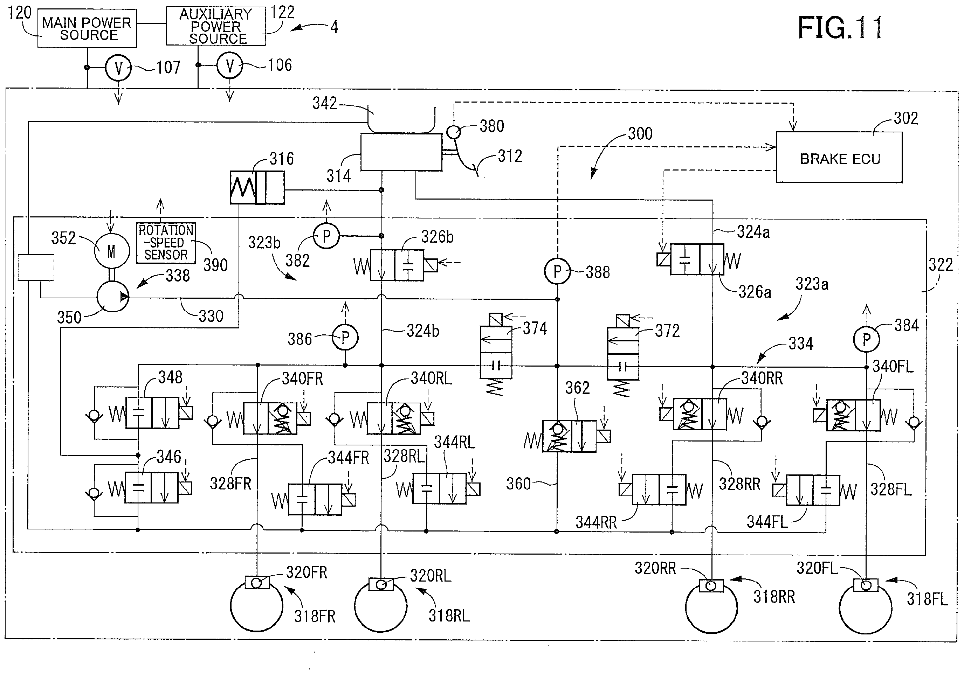

The present disclosure may be applied to a vehicle brake system illustrated in Fig. 11. The present brake system includes a braking device 300, a brake ECU 302, and the vehicle-mounted power source 4. The braking device 300 includes: a master cylinder 314 configured to produce a hydraulic pressure related to an operation of a brake pedal 312; a stroke simulator 316 connected to the master cylinder 314; wheel cylinders 320 provided for hydraulic brakes 318 provided for the respective front left and right and rear left and right wheels; and a hydraulic-pressure control unit 322 provided between the wheel cylinders 320 and the master cylinder 314. The braking device 300 has an X-type two lines, specifically, the braking device 300 has: a brake line 323a including the hydraulic brakes 318FL provided for the front left wheel and the hydraulic brakes 318RR provided for the rear right wheel; and a brake line 323b including the hydraulic brake 318FR provided for the front right wheel and the hydraulic brake 318RL provided for the rear left wheel.

The hydraulic-pressure control unit 322 includes master cut-off valves 326a, 326b provided respectively on main passages 324a, 324b each connecting between the master cylinder 314 and each of corresponding ones of the wheel cylinders 320; a common passage 334 to which the main passages 324a, 324b, individual passages 328 connected to the respective wheel cylinders 320, and a pump passage 330 are connected; a pump unit 338 provided in the pump passage 330; pressure holding valves 340 that are normally-open electromagnetic valves provided in the respective individual passages 328; pressure reduction valves 344 that are normally-closed electromagnetic valves each provided between a master reservoir 342 and a corresponding one of the wheel cylinders 320; a simulator control valve 346 that is a normally-closed electromagnetic valve provided between the stroke simulator 316 and the master reservoir 342; and an electromagnetic valve 348 provided between the stroke simulator 316 and the common passage 334. The pump unit 338 includes a pump 350 and a pump motor 352.

The pump passage 330 is connected to the common passage 334 at a position located between (i) portions of the common passage 334 to which the individual passages 328FR, 328RL in the brake line 323b are respectively connected and (ii) portions of the common passage 334 to which the individual passages 328FL, 328RR in the brake line 323a are respectively connected. The pump passage 330 and the master reservoir 342 are connected to each other by a control passage 360. A normally-closed electromagnetic valve in the form of a discharge-pressure control valve 362 is provided in the control passage 360. A normally-closed electromagnetic valve in the form of a communication valve 372 is provided in the common passage 334 at a position located between (i) portions of the common passage 334 to which the individual passages 328FL, 328RR in the brake line 323a are connected and (ii) a portion of the common passage 334 to which the pump passage 330 and the control passage 360 are connected. A normally-closed electromagnetic valve in the form of a communication valve 374 is provided in the common passage 334 at a position located between (i) portions of the common passage 334 to which the individual passages 328FR, 328RL in the brake line 323b are connected and (ii) the portion of the common passage 334 to which the pump passage 330 and the control passage 360 are connected.

The brake ECU 302 is principally constituted by a computer. Devices connected to the brake ECU 302 include: a stroke sensor 380 configured to detect a stroke of the brake pedal 312; a master-cylinder-pressure sensor 382 configured to detect a hydraulic pressure in the master cylinder; common hydraulic-pressure sensors 384, 386 each configured to detect a hydraulic pressure in the common passage 334; a discharge-pressure sensor 388 configured to detect a discharge pressure of the pump 350; the auxiliary voltage sensor 106 configured to detect electric power of the auxiliary power source 122; the main voltage sensor 107 configured to detect the voltage of the main power source 120; a rotation-speed sensor 390 configured to detect a rotation speed of the pump motor 352; a drive circuit of the pump motor 352; and the solenoids of the electromagnetic valves such as the master cut-off valves 326a, 326b, the pressure holding valves 340, the discharge-pressure control valve 362, the simulator control valve 346, and the communication valves 372, 374.

In the present embodiment, in the case where a regenerative cooperative control is executed, for example, the currents are supplied to the solenoids of the master cut-off valves 326a, 326b, the simulator control valve 346, and the communication valves 372, 374 to close the master cut-off valves 326a, 326b, open the simulator control valve 346, and open the communication valves 372, 374. In this state, the pump motor 352 is controlled to actuate the pump 350, so that the hydraulic pressure of the working liquid discharged from the pump 350 is supplied to the wheel cylinders 320 provided for the respective front left and right and rear left and right wheels.

In the case where the requested hydraulic pressure Pt for the respective wheel cylinders 320 are equal to each other, the hydraulic pressures in the respective wheel cylinders 320 are controlled together by control of at least one of the pump motor 352 and the discharge-pressure control valve 362. In the case where the requested hydraulic pressure Pt for the respective wheel cylinders 320 are different from each other, currents to be supplied to the solenoids of the respective pressure holding valves 340 are controlled to individually control the hydraulic pressures in the respective wheel cylinders 320 using the hydraulic pressure of the working liquid discharged from the pump 350. The electromagnetic-valve requested current is obtained based on currents requested by the master cut-off valves 326a, 326b, the simulator control valve 346, the communication valves 372, 374, and the discharge-pressure control valve 362 or obtained based on currents requested by the master cut-off valves 326a, 326b, the simulator control valve 346, the communication valves 372, 374, the pressure holding valves 340, and so on, for example.

The system usable current Imit is calculated based on a value obtained by subtracting a lowest operation voltage Vlow required for operations of the brake ECU 302, from the voltage Vbat of the auxiliary power source 122. The motor usable current Immit is obtained based on a value obtained by subtracting the electromagnetic-valve-ECU requested current Ibase from the system usable current Imit. The motor usable current Immit is determined to the pump-motor usable current ImmitP. In the case where the requested duty ratio DtP for a pump motor 336 which is obtained based on the brake request is greater than the maximum allowable duty ratio DmaxP obtained based on the motor usable current Immit, the control duty ratio DP* that is a duty ratio of a current to be actually supplied to the pump motor 336 is limited to a value less than or equal to the maximum allowable duty ratio, thereby reducing the inrush current. This makes it difficult to establish a state in which the brake ECU 302 is inoperable.

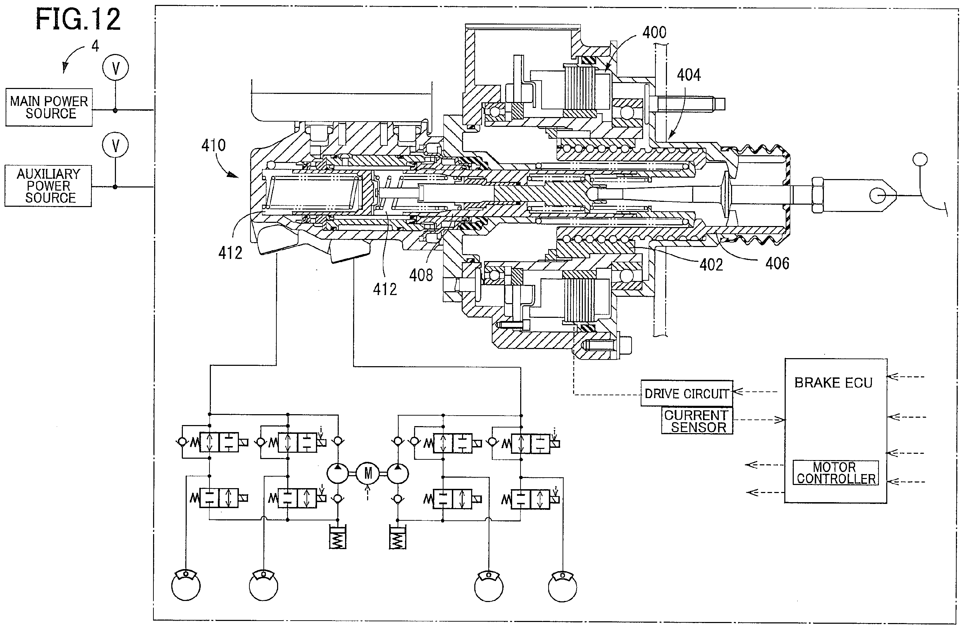

It is noted that the vehicle brake system may have any configuration. For example, the present disclosure may be applied to a brake system in which electric brakes are provided respectively for the front left and right and rear left and right wheels. In this case, the motor usable current Immit is determined to the brake-motor usable current ImmitB. As illustrated in Fig. 12, the present disclosure may be applied to a brake system including a mechanism in which a motion converter 404 converts rotation of an output shaft 402 of an assist electric motor 400 to straight movement of a pressing member 406, and the pressing member 406 is moved forward to move a pressurizing piston 408 forward to produce a hydraulic pressure in a pressure chamber 412 of a master cylinder 410. In the present embodiment, the motor usable current Immit is determined to a current usable by the assist electric motor 400.

An object to which the present disclosure is applied is not limited to the vehicle brake system and may be a steering system, for example. The steering system includes an assist motor as an actuator for assisting a steering torque. That is, a technique according to the present disclosure can be achieved in the case where an auxiliary power source is shared between electric motors or the like having different functions, such as a brake system and a steering system.

The technique according to the present disclosure may be implemented in a state in which electric power is suppliable from the main power source 120 to the braking device, the ECUs, and so on. It is to be understood that the invention is not limited to the details of the illustrated embodiments, but may be embodied with various changes and modifications, which may occur to those skilled in the art, without departing from the scope of the invention, which is defined by the claims.

## Claims

1. An actuator controller (8; 202; 302) configured to control one or more actuators (52L, 52R, 56, 70L, 70R, 72L, 72R, 74, 86; 222, 223, 230, 231, 234, 252; 326, 340, 344, 372, 374, 346, 348, 352; 400) operable by electric power supplied from a vehicle-mounted power source (4) that is a power source installed in a vehicle,
wherein the actuator controller (8; 202; 302) comprises:
a voltage-drop-margin-value obtainer (S53) configured to obtain a voltage-drop margin value (ΔV) that is obtained by subtracting a lowest operation voltage (Vlow) required for an operation of the actuator controller (8; 202; 302), from a voltage (Vbat) of the vehicle-mounted power source (4); and
an operation restrictor (S6-S8) configured to restrict an operation of each of at least one actuator of the one or more actuators (52L, 52R, 56, 70L, 70R, 72L, 72R, 74, 86; 222, 223, 230, 231, 234, 252; 326, 340, 344, 372, 374, 346, 348, 352; 400) such that an amount of a voltage drop caused by an operation of the one or more actuators (52L, 52R, 56, 70L, 70R, 72L, 72R, 74, 86; 222, 223, 230, 231, 234, 252; 326, 340, 344, 372, 374, 346, 348, 352; 400) does not exceed the voltage-drop margin value (ΔV) obtained by the voltage-drop-margin-value obtainer (S53);
**characterised in that** the actuator controller (8; 202; 302) is configured to control a plurality of actuators (52L, 52R, 56, 70L, 70R, 72L, 72R, 74, 86; 222, 223, 230, 231, 234, 252; 326, 340, 344, 372, 374, 346, 348, 352; 400) as the one or more actuators (52L, 52R, 56, 70L, 70R, 72L, 72R, 74, 86; 222, 223, 230, 231, 234, 252; 326, 340, 344, 372, 374, 346, 348, 352: 400),
wherein the plurality of actuators (52L, 52R, 56, 70L, 70R, 72L, 72R, 74, 86; 222, 223, 230, 231, 234, 252; 326, 340, 344, 372, 374, 346, 348, 352; 400) comprise one or more first actuators (52L, 52R, 70L, 70R, 72L, 72R, 74; 222, 223, 230, 231, 234; 326, 340, 344, 372, 374, 346, 348) and one or more second actuators (56, 86; 252; 352; 400),
wherein the at least one actuator is at least one of the one or more second actuators (56, 86; 252; 352; 400),
wherein the actuator controller (8; 202; 302) further comprises:
a usable-current obtainer (S54) configured to obtain a usable current (Imit) based on the voltage-drop margin value (ΔV) obtained by the voltage-drop-margin-value obtainer (S53), the usable current (Imit) being a current suppliable from the vehicle-mounted power source (4) to the plurality of actuators (52L, 52R, 56, 70L, 70R, 72L, 72R, 74, 86; 222, 223, 230, 231, 234, 252; 326, 340, 344, 372, 374, 346, 348, 352; 400) and the actuator controller (8; 202; 302) and usable for the plurality of actuators (52L, 52R, 56, 70L, 70R, 72L, 72R, 74, 86; 222, 223, 230, 231, 234, 252; 326, 340, 344, 372, 374, 346, 348, 352; 400) and the actuator controller (8; 202; 302);
a total-first-requested-current obtainer (S51) configured to obtain a first requested current based on a first requested operating state requested for each of the one or more first actuators (52L, 52R, 70L, 70R, 72L, 72R, 74; 222, 223, 230, 231, 234; 326, 340, 344, 372, 374, 346, 348), the first requested current being a current requested for establishing the first requested operating state in each of the one or more first actuators (52L, 52R, 70L, 70R, 72L, 72R, 74; 222, 223, 230, 231, 234; 326, 340, 344, 372, 374, 346, 348), the total-first-requested-current obtainer (S51) being configured to obtain a sum of at least one first requested current each as the obtained first requested current;
a second usable-current obtainer (S55, S56) configured to obtain a second usable current (Imit, DmaxP, DmaxB) based on a value obtained by subtracting a current required for an operation of the actuator controller (8; 202; 302) and the sum of the at least one first requested current obtained by the total-first-requested-current obtainer (S51), from the usable current (Imit) obtained by the usable-current obtainer (S54), the second usable current (Imit, DmaxP, DmaxB) being a current usable for each of the one or more second actuators (56, 86; 252; 352; 400); and
a second-operation-start-requested-current obtainer (S46) configured to obtain a second operation-start requested current (DtP, DtB) based on an operation-start requested operating state that is requested for each of the one or more second actuators (56, 86; 252; 352; 400) at a start of an operation thereof, the second operation-start requested current (DtP, DtB) being a current requested for each of the one or more second actuators (56, 86; 252; 352; 400),
wherein the operation restrictor (S6-S8) is configured to, when the second operation-start requested current (DtP, DtB) obtained by the second-operation-start-requested-current obtainer (S46) is greater than the second usable current (Imit, DmaxP, DmaxB) obtained by the second usable-current obtainer (S55, S56) in at least one second actuator of the one or more second actuators (56, 86; 252; 352; 400), restrict an operation of at least one of the at least one second actuator in which the second operation-start requested current (DtP, DtB) is greater than the second usable current (Imit, DmaxP, DmaxB;
wherein the actuator controller further comprises:
a maximum-allowable-duty-ratio obtainer (S56) configured to obtain a maximum allowable duty ratio (DmaxP, DmaxB) based on the second usable current (Imit, DmaxP, DmaxB) obtained by the second usable-current obtainer (S55, S56) for each of the one or more second actuators (56, 86; 252; 352; 400), the maximum allowable duty ratio (DmaxP, DmaxB) being a maximum value of a duty ratio of a current suppliable to each of the one or more second actuators (56, 86; 252; 352; 400); and
a requested-duty-ratio obtainer (S46) configured to obtain a requested duty ratio (DtP, DtB) based on the second operation-start requested current (DtP, DtB) obtained by the second-operation-start-requested-current obtainer (S46) for each of the one or more second actuators (56, 86; 252; 352; 400), the requested duty ratio (DtP, DtB) being a duty ratio of a supply current requested for each of the one or more second actuators (56, 86; 252; 352; 400),
wherein the operation restrictor (S6-S8) comprises a duty-ratio restrictor (S6-S8) configured to, when the requested duty ratio (DtP, DtB) obtained by the requested-duty-ratio obtainer (S46) is greater than the maximum allowable duty ratio (DmaxP, DmaxB) obtained by the maximum-allowable-duty-ratio obtainer (S56) in at least one second actuator of the one or more second actuators (56, 86; 252; 352; 400), limit a control duty ratio (DP*, DB*) to a value less than or equal to the maximum allowable duty ratio (DmaxP, DmaxB), the control duty ratio (DP*, DB*) being a duty ratio of a current to be supplied to at least one of the at least one second actuator in which the requested duty ratio (DtP, DtB) is greater than the maximum allowable duty ratio (DmaxP, DmaxB).

2. The actuator controller (8; 202; 302) according to claim 1, wherein the operation restrictor (S6-S8) comprises an inrush-current restrictor (S6-S8) configured to reduce an inrush current for each of the at least one actuator by restricting an operation of each of the at least one actuator at a start of the operation.

3. A vehicle-installed system, comprising:
a vehicle-mounted power source (4) that is a power source installed in a vehicle;
a vehicle-mounted device (6; 200; 300) operable by electric power supplied from the vehicle-mounted power source (4); and
a vehicle-mounted-device controller (8) operable by electric power supplied from the vehicle-mounted power source (4) and configured to control the vehicle-mounted device (6; 200; 300), the vehicle-mounted-devicce controller being an actuator controller according to claim 1 or 2,
wherein the vehicle-mounted device (6; 200; 300) comprises said one or more actuators (52L, 52R, 56, 70L, 70R, 72L, 72R, 74, 86; 222, 223, 230, 231, 234, 252; 326, 340, 344, 372, 374, 346, 348, 352; 400).

4. The vehicle-installed system according to claim 3,
wherein the vehicle-mounted power source (4) comprises a main power source (120) and an auxiliary power source (122),
wherein the vehicle-installed system comprises a main-power-supply-state obtainer (S1) configured to obtain whether the vehicle-installed system is in a state in which electric power is suppliable from the main power source (120) to the vehicle-mounted device (6; 200; 300) and the vehicle-mounted-device controller (8), and
wherein the operation restrictor (S6-S8) is configured to control at least one actuator of the one or more actuators (52L, 52R, 56, 70L, 70R, 72L, 72R, 74, 86; 222, 223, 230, 231, 234, 252; 326, 340, 344, 372, 374, 346, 348, 352; 400) when the main-power-supply-state obtainer (S1) obtains that the vehicle-installed system is in a state in which electric power is not suppliable from the main power source (120) to the vehicle-mounted device (6; 200; 300) and the vehicle-mounted-device controller (8).

5. The vehicle-installed system according to claim 3 or 4, wherein the vehicle-mounted device (6; 200; 300) comprises a pump motor (56; 252; 352) configured to drive a pump (54; 250; 350) configured to supply a hydraulic pressure to a wheel cylinder (30; 220; 320) of a hydraulic brake (12; 214, 216; 318) provided for a wheel (10, 14) of the vehicle.

6. The vehicle-installed system according to any one of claims 3 through 5, wherein the vehicle-mounted device (6) comprises a plurality of brake motors (86) configured to respectively drive a plurality of electric brakes (16) provided respectively for a plurality of wheels (14) of the vehicle to respectively reduce rotations of the plurality of wheels (14).

7. The vehicle-installed system according to any one of claims 3 through 6, wherein the vehicle-mounted device (6; 200; 300) comprises:
a plurality of wheel cylinders (30; 220; 320) respectively for a plurality of hydraulic brakes (12; 216; 318) provided respectively for a plurality of wheels (10) of the vehicle to respectively reduce rotations of the plurality of wheels (10);
a hydraulic-pressure source; and
one or more electromagnetic valves (52, 58; 326, 340, 344, 346, 348) provided between the hydraulic-pressure source and each of the plurality of wheel cylinders (30; 220; 320).

## Patentansprüche

1. Stellgliedsteuerung (8; 202; 302), die dafür konfiguriert ist, ein oder mehrere Stellglieder (52L, 52R, 56, 70L, 70R, 72L, 72R, 74, 86; 222, 223, 230, 231, 234, 252; 326, 340, 344, 372, 374, 346, 348, 352; 400) zu steuern, die mit elektrischer Energie betrieben werden können, die von einer fahrzeugmontierten Energiequelle (4) zugeführt wird, die eine in einem Fahrzeug installierte Energiequelle ist,
wobei die Stellgliedsteuerung (8; 202; 302) Folgendes umfasst:
einen Spannungsabfall-Randwert-Ermittler (S53), der dafür konfiguriert ist, einen Spannungsabfall-Randwert (ΔV) zu ermitteln, der durch Subtraktion einer niedrigsten Betriebsspannung (Vlow), die für einen Betrieb der Stellgliedsteuerung (8; 202; 302) erforderlich ist, von einer Spannung (Vbat) der fahrzeugmontierten Energiequelle (4) ermittelt wird; und
einen Betriebsbegrenzer (S6-S8), der dafür konfiguriert ist, einen Betrieb jedes von mindestens einem Stellglied des einen oder der mehreren Stellglieder (52L, 52R, 56, 70L, 70R, 72L, 72R, 74, 86; 222, 223, 230, 231, 234, 252; 326, 340, 344, 372, 374, 346, 348, 352; 400) zu begrenzen, so dass ein Betrag eines Spannungsabfalls, der durch einen Betrieb des einen oder der mehreren Stellglieder (52L, 52R, 56, 70L, 70R, 72L, 72R, 74, 86; 222, 223, 230, 231, 234, 252; 326, 340, 344, 372, 374, 346, 348, 352; 400) verursacht wird, den Spannungsabfall-Randwert (ΔV), der durch den Spannungsabfall-Randwert-Ermittler (S53) ermittelt wird, nicht überschreitet;
**dadurch gekennzeichnet, dass** die Stellgliedsteuerung (8; 202; 302) dafür konfiguriert ist, eine Vielzahl der Stellglieder (52L, 52R, 56, 70L, 70R, 72L, 72R, 74, 86; 222, 223, 230, 231, 234, 252; 326, 340, 344, 372, 374, 346, 348, 352; 400) als das eine oder die mehreren Stellglieder (52L, 52R, 56, 70L, 70R, 72L, 72R, 74, 86; 222, 223, 230, 231, 234, 252; 326, 340, 344, 372, 374, 346, 348, 352; 400) zu steuern,
wobei die Vielzahl der Stellglieder (52L, 52R, 56, 70L, 70R, 72L, 72R, 74, 86; 222, 223, 230, 231, 234, 252; 326, 340, 344, 372, 374, 346, 348, 352; 400) ein oder mehrere erste Stellglieder (52L, 52R, 70L, 70R, 72L, 72R, 74; 222, 223, 230, 231, 234; 326, 340, 344, 372, 374, 346, 348) und ein oder mehrere zweite Stellglieder (56, 86; 252; 352; 400) umfasst,
wobei das mindestens eine Stellglied mindestens eines des einen oder der mehreren zweiten Stellglieder (56, 86; 252; 352; 400) ist,
wobei die Stellgliedsteuerung (8; 202; 302) ferner Folgendes umfasst:
einen Nutzstrom-Ermittler (S54), die dafür konfiguriert ist, einen Nutzstrom (Imit) basierend auf dem Spannungsabfall-Randwert (ΔV) zu ermitteln, der von dem Spannungsabfall-Randwert-Ermittler (S53) ermittelt wurde, wobei der Nutzstrom (Imit) ein Strom ist, der von der fahrzeugmontierten Energiequelle (4) zu der Vielzahl der Stellglieder (52L, 52R, 56, 70L, 70R, 72L, 72R, 74, 86; 222, 223, 230, 231, 234, 252; 326, 340, 344, 372, 374, 346, 348, 352; 400) und der Stellgliedsteuerung (8; 202; 302) geliefert werden kann und für die Vielzahl der Stellglieder (52L, 52R, 56, 70L, 70R, 72L, 72R, 74, 86; 222, 223, 230, 231, 234, 252; 326, 340, 344, 372, 374, 346, 348, 352; 400) und die Stellgliedsteuerung (8; 202; 302) verwendbar ist;
einen Gesamt-Erstanforderungs-Stromermittler (S51), der dafür konfiguriert ist, einen ersten angeforderten Strom basierend auf einem ersten angeforderten Betriebszustand zu ermitteln, der für jedes des einen oder der mehreren ersten Stellglieder (52L, 52R, 70L, 70R, 72L, 72R, 74; 222, 223, 230, 231, 234; 326, 340, 344, 372, 374, 346, 348) angefordert wird, wobei der erste angeforderte Strom ein Strom ist, der angefordert wird, um den ersten angeforderten Betriebszustand in jedem der einen oder mehreren ersten Stellglieder (52L, 52R, 70L, 70R, 72L, 72R, 74; 222, 223, 230, 231, 234; 326, 340, 344, 372, 374, 346, 348) herzustellen, wobei der Gesamt-Erstanforderungs-Stromermittler (S51) dafür konfiguriert ist, eine Summe von mindestens einem ersten angeforderten Strom jeweils als den ermittelnen ersten angeforderten Strom zu ermitteln;
einen zweiten Nutzstrom-Ermittler (S55, S56), der dafür konfiguriert ist, Folgendes zu ermitteln: einen zweiten Nutzstrom (Imit, DmaxP, DmaxB), basierend auf einem Wert, der ermittelt wurde durch Subtrahieren eines Stroms, der für einen Betrieb der Stellgliedsteuerung (8; 202; 302) erforderlich ist, und der Summe des mindestens einen ersten angeforderten Stroms, der durch den Gesamt-Erstanforderungs-Stromermittler (S51) ermittelt wurde, aus dem Nutzstrom (Imit), der durch den Nutzstrom-Ermittler (S54) ermittelt wird, wobei der zweite Nutzstrom (Imit, DmaxP, DmaxB) ein Strom ist, der für jedes des einen oder der mehreren zweiten Stellglieder (56, 86; 252; 352; 400) nutzbar ist; und
einen zweiten Betriebsstart-Anforderungsstrom-Ermittler (S46), der dafür konfiguriert ist, einen zweiten Betriebsstart-Anforderungsstrom (DtP, DtB) basierend auf einem Betriebsstart-Anforderungsbetriebszustand zu ermitteln, der für jedes des einen oder der mehreren zweiten Stellglieder (56, 86; 252; 352; 400) bei einem Start eines Betriebs davon angefordert wird, wobei der zweite Betriebsstart-Anforderungsstrom (DtP, DtB) ein Strom ist, der für jedes der einen oder mehreren zweiten Stellglieder (56, 86; 252; 352; 400) angefordert wird,
wobei der Betriebsbegrenzer (S6-S8) dafür konfiguriert ist, wenn der zweite Betriebsstart-Anforderungsstrom (DtP, DtB), der durch den zweiten Betriebsstart-Anforderungsstrom-Ermittler (S46) ermittelt wird, größer ist als der zweite Nutzstrom (Imit, DmaxP, DmaxB), der durch den zweiten Nutzstrom-Ermittler (S55, S56) in mindestens einem zweiten Stellglied des einen oder der mehreren zweiten Stellglieder (56, 86; 252; 352; 400) erhalten wird, einen Betrieb von mindestens einem des mindestens einen zweiten Stellglieds zu beschränken, bei dem der zweite Betriebsstart-Anforderungsstrom (DtP, DtB) größer ist als der zweite Nutzstrom (Imit, DmaxP, DmaxB);
wobei die Stellgliedsteuerung ferner Folgendes umfasst:
einen Ermittler (S56) des höchstzulässigen Tastverhältnisses, der dafür konfiguriert ist, ein höchstzulässiges Tastverhältnis (DmaxP, DmaxB) basierend auf dem zweiten Nutzstrom (Imit, DmaxP, DmaxB) zu ermitteln, der durch den zweiten Nutzstrom-Ermittler (S55, S56) für jedes des einen oder der mehreren zweiten Stellglieder (56, 86; 252; 352; 400) ermittelt wird, wobei das höchstzulässige Tastverhältnis (DmaxP, DmaxB) ein Höchstwert eines Tastverhältnisses eines Stroms ist, der jedem des einen oder der mehreren zweiten Stellglieder (56, 86; 252; 352; 400) zugeführt werden kann; und
einen Ermittler (S46) des angeforderten Tastverhältnisses, der dafür konfiguriert ist, ein angefordertes Tastverhältnis (DtP, DtB) basierend auf dem zweiten Betriebsstart-Anforderungsstrom (DtP, DtB) zu ermitteln, der durch den zweiten Betriebsstart-Anforderungsstrom-Ermittler (S46) für jedes des einen oder der mehreren zweiten Stellglieder (56, 86; 252; 352; 400) ermittelt wird, wobei das angeforderte Tastverhältnis (DtP, DtB) ein Tastverhältnis eines Versorgungsstroms ist, der für jedes des einen oder der mehreren zweiten Stellglieder (56, 86; 252; 352; 400) angefordert wird,
wobei der Betriebsbegrenzer (S6-S8) einen Tastverhältnisbegrenzer (S6-S8) umfasst, der dafür konfiguriert ist, wenn das angeforderte Tastverhältnis (DtP, DtB), das von dem Erfasser (S46) des angeforderten Tastverhältnisses ermittelt wird, größer ist als das höchstzulässige Tastverhältnis (DmaxP, DmaxB), das von dem Erfasser (S56) des höchstzulässigen Tastverhältnisses in mindestens einem zweiten Stellglied des einen oder der mehreren zweiten Stellglieder (56, 86; 252; 352; 400) ermittelt wird, ein Steuertastverhältnis (DP*, DB*) auf einen Wert kleiner oder gleich dem höchstzulässigen Tastverhältnis (DmaxP, DmaxB) zu begrenzen, wobei das Steuertastverhältnis (DP*, DB*) ein Tastverhältnis eines Stroms ist, der mindestens einem des mindestens einen zweiten Stellglieds zugeführt werden soll, bei dem das angeforderte Tastverhältnis (DtP, DtB) größer ist als das höchstzulässige Tastverhältnis (DmaxP, DmaxB).

2. Stellgliedsteuerung (8; 202; 302) nach Anspruch 1, wobei der Betriebsbegrenzer (S6-S8) einen Einschaltstrombegrenzer (S6-S8) umfasst, der dafür konfiguriert ist, einen Einschaltstrom für jeden des mindestens einen Stellglieds zu reduzieren, indem er einen Betrieb jedes des mindestens einen Stellglieds bei einem Start des Betriebs begrenzt.

3. Fahrzeuginstalliertes System, das Folgendes umfasst:
eine fahrzeugmontierte Stromquelle (4), die eine in einem Fahrzeug installierte Stromquelle ist;
eine fahrzeugmontierte Vorrichtung (6; 200; 300), die mit elektrischer Energie betrieben werden kann, die von der fahrzeugmontierten Energiequelle (4) geliefert wird; und
eine Steuereinheit (8) für die fahrzeugmontierte Vorrichtung, die durch elektrische Energie betrieben werden kann, die von der fahrzeugmontierten Energiequelle (4) zugeführt wird, und die dafür konfiguriert ist, die fahrzeugmontierte Vorrichtung (6; 200; 300) zu steuern, wobei die fahrzeugmontierte Vorrichtungssteuerung eine Stellgliedsteuerung nach Anspruch 1 oder 2 ist,
wobei die fahrzeugmontierte Vorrichtung (6; 200; 300) das eine oder die mehreren Stellglieder (52L, 52R, 56, 70L, 70R, 72L, 72R, 74, 86; 222, 223, 230, 231, 234, 252; 326, 340, 344, 372, 374, 346, 348, 352; 400) umfasst.

4. Fahrzeuginstalliertes System nach Anspruch 3,
wobei die fahrzeugmontierte Stromquelle (4) eine Hauptstromquelle (120) und eine Hilfsstromquelle (122) umfasst,
wobei das fahrzeuginstallierte System einen Hauptenergieversorgungszustands-Ermittler (S1) umfasst, der dafür konfiguriert ist, zu ermitteln, ob sich das fahrzeuginstallierte System in einem Zustand befindet, in dem elektrische Energie von der Hauptenergiequelle (120) an die fahrzeugmontierte Vorrichtung (6; 200; 300) und die fahrzeugmontierte Vorrichtungssteuerung (8) geliefert werden kann, und
wobei der Betriebsbegrenzer (S6-S8) dafür konfiguriert ist, mindestens ein Stellglied des einen oder der mehreren Stellglieder (52L, 52R, 56, 70L, 70R, 72L, 72R, 74, 86; 222, 223, 230, 231, 234, 252; 326, 340, 344, 372, 374, 346, 348, 352; 400) zu steuern, wenn der Hauptenergieversorgungszustands-Ermittler (S1) ermittelt, dass sich das fahrzeuginstallierte System in einem Zustand befindet, in dem keine elektrische Energie von der Hauptenergiequelle (120) zu der fahrzeugmontierten Vorrichtung (6; 200; 300) und der Steuervorrichtung (8) der fahrzeugmontierten Vorrichtung geliefert werden kann.

5. Fahrzeuginstalliertes System nach Anspruch 3 oder 4, wobei die fahrzeugmontierte Vorrichtung (6; 200; 300) einen Pumpenmotor (56; 252; 352) umfasst, der zum Antrieb einer Pumpe (54; 250; 350) konfiguriert ist, die dafür konfiguriert ist, einen Radzylinder (30; 220; 320) einer hydraulischen Bremse (12; 214, 216; 318), die für ein Rad (10, 14) des Fahrzeugs vorgesehen ist, mit einem hydraulischen Druck zu versorgen.

6. Fahrzeuginstalliertes System nach einem der Ansprüche 3 bis 5, wobei die fahrzeugmontierte Vorrichtung (6) eine Vielzahl von Bremsmotoren (86) umfasst, die dafür konfiguriert sind, jeweils eine Vielzahl von elektrischen Bremsen (16) anzutreiben, die jeweils für eine Vielzahl von Rädern (14) des Fahrzeugs vorgesehen sind, um jeweils die Drehungen der Vielzahl von Rädern (14) zu reduzieren.

7. Fahrzeuginstalliertes System nach einem der Ansprüche 3 bis 6, wobei die fahrzeugmontierte Vorrichtung (6; 200; 300) Folgendes umfasst:
eine Vielzahl von Radzylindern (30; 220; 320) jeweils für eine Vielzahl von hydraulischen Bremsen (12; 216; 318), die jeweils für eine Vielzahl von Rädern (10) des Fahrzeugs vorgesehen sind, um die Drehungen der Vielzahl von Rädern (10) jeweils zu reduzieren;
eine Hydraulikdruckquelle; und
ein oder mehrere elektromagnetische Ventile (52, 58; 326, 340, 344, 346, 348), die zwischen der Hydraulikdruckquelle und jedem der Vielzahl von Radzylindern (30; 220; 320) vorgesehen sind.

## Revendications

1. Contrôleur d'actionneur (8 ; 202 ; 302) configuré pour contrôler un ou plusieurs actionneurs (52L, 52R, 56, 70L, 70R, 72L, 72R, 74, 86 ; 222, 223, 230, 231, 234, 252 ; 326, 340, 344, 372, 374, 346, 348, 352 ; 400) actionnable par de l'énergie électrique fournie par une source d'alimentation montée sur véhicule (4) qui est une source d'alimentation installée dans un véhicule,
dans lequel le contrôleur d'actionneur (8 ; 202 ; 302) comprend :
un dispositif d'obtention de valeur de marge de chute de tension (S53) configuré pour obtenir une valeur de marge de chute de tension (ΔV) qui est obtenue en soustrayant une tension de fonctionnement la plus basse (Vlow) requise pour un fonctionnement du contrôleur d'actionneur (8 ; 202 ; 302), d'une tension (Vbat) de la source d'alimentation montée sur véhicule (4) ; et
un limiteur de fonctionnement (S6-S8) configuré pour limiter un fonctionnement de chacun d'au moins un actionneur parmi l'un ou plusieurs actionneurs (52L, 52R, 56, 70L, 70R, 72L, 72R, 74, 86 ; 222, 223, 230, 231, 234, 252 ; 326, 340, 344, 372, 374, 346, 348, 352 ; 400) de sorte qu'une quantité d'une chute de tension provoquée par un fonctionnement de l'un ou plusieurs actionneurs (52L, 52R, 56, 70L, 70R, 72L, 72R, 74, 86 ; 222, 223, 230, 231, 234, 252 ; 326, 340, 344, 372, 374, 346, 348, 352 ; 400) ne dépasse pas la valeur de marge de chute de tension (ΔV) obtenue par le dispositif d'obtention de valeur de marge de chute de tension (S53) ;
**caractérisé en ce que** le contrôleur d'actionneur (8 ; 202 ; 302) est configuré pour contrôler une pluralité d'actionneurs (52L, 52R, 56, 70L, 70R, 72L, 72R, 74, 86 ; 222, 223, 230, 231, 234, 252 ; 326, 340, 344, 372, 374, 346, 348, 352 ; 400) en tant qu'un ou plusieurs actionneurs (52L, 52R, 56, 70L, 70R, 72L, 72R, 74, 86 ; 222, 223, 230 , 231, 234, 252 ; 326, 340, 344, 372, 374, 346, 348, 352 ; 400),
dans lequel la pluralité d'actionneurs (52L, 52R, 56, 70L, 70R, 72L, 72R, 74, 86 ; 222, 223, 230, 231, 234, 252 ; 326, 340, 344, 372, 374, 346, 348, 352 ; 400) comprennent un ou plusieurs premiers actionneurs (52L, 52R, 70L, 70R, 72L, 72R, 74 ; 222, 223, 230, 231, 234 ; 326, 340, 344, 372, 374, 346, 348) et un ou plusieurs deuxièmes actionneurs (56, 86 ; 252 ; 352 ; 400),
dans lequel l'au moins un actionneur est au moins un de l'un ou plusieurs deuxièmes actionneurs (56, 86 ; 252 ; 352 ; 400),
dans lequel le contrôleur d'actionneur (8 ; 202 ; 302) comprend en outre :
un dispositif d'obtention de courant utilisable (S54) configuré pour obtenir un courant utilisable (Imit) basé sur la valeur de marge de chute de tension (ΔV) obtenue par le dispositif d'obtention de valeur de marge de chute de tension (S53), le courant utilisable (Imit) étant un courant pouvant être fourni par la source d'alimentation montée sur véhicule (4) à la pluralité d'actionneurs (52L, 52R, 56, 70L, 70R, 72L, 72R, 74, 86 ; 222, 223, 230, 231, 234, 252 ; 326, 340, 344, 372, 374, 346, 348, 352 ; 400) et au contrôleur d'actionneur (8 ; 202 ; 302) et utilisable pour la pluralité d'actionneurs (52L, 52R, 56, 70L, 70R, 72L, 72R, 74, 86 ; 222, 223, 230, 231, 234, 252 ; 326, 340, 344, 372, 374, 346, 348, 352 ; 400) et le contrôleur d'actionneur (8 ; 202 ; 302) ;
un dispositif d'obtention de premier courant demandé total (S51) configuré pour obtenir un premier courant demandé sur la base d'un premier état de fonctionnement demandé qui est demandé pour chacun de l'un ou plusieurs premiers actionneurs (52L, 52R, 70L, 70R, 72L, 72R, 74 ; 222, 223, 230, 231, 234 ; 326, 340, 344, 372, 374, 346, 348), le premier courant demandé étant un courant demandé pour établir le premier état de fonctionnement demandé dans chacun de l'un ou plusieurs premiers actionneurs (52L, 52R, 70L, 70R, 72L, 72R, 74 ; 222, 223, 230, 231, 234 ; 326, 340, 344, 372, 374, 346, 348), le dispositif d'obtention de premier courant demandé total (S51) étant configuré pour obtenir une somme d'au moins un premier courant demandé chacun en tant que premier courant demandé obtenu ;
un dispositif d'obtention de deuxième courant utilisable (S55, S56) configuré pour obtenir un deuxième courant utilisable (Imit, DmaxP, DmaxB) sur la base d'une valeur obtenue en soustrayant un courant requis pour un fonctionnement du contrôleur d'actionneur (8 ; 202 ; 302) et la somme de l'au moins un premier courant demandé obtenu par le dispositif d'obtention de premier courant demandé total (S51), du courant utilisable (Imit) obtenu par le dispositif d'obtention de courant utilisable (S54), le deuxième courant utilisable (Imit, DmaxP, DmaxB) étant un courant utilisable pour chacun de l'un ou plusieurs deuxièmes actionneurs (56, 86 ; 252 ; 352 ; 400) ; et
un dispositif d'obtention de courant de démarrage de deuxième fonctionnement (S46) configuré pour obtenir un courant de démarrage de deuxième fonctionnement demandé (DtP, DtB) sur la base d'un état de fonctionnement de démarrage de fonctionnement demandé qui est demandé pour chacun de l'un ou plusieurs deuxièmes actionneurs (56, 86 ; 252 ; 352 ; 400) à un démarrage d'un fonctionnement de ceux-ci, le courant de démarrage de deuxième fonctionnement demandé (DtP, DtB) étant un courant demandé pour chacun de l'un ou plusieurs deuxièmes actionneurs (56, 86 ; 252 ; 352 ; 400),
dans lequel le limiteur de fonctionnement (S6-S8) est configuré pour, lorsque le courant de démarrage de deuxième fonctionnement demandé (DtP, DtB) obtenu par le dispositif d'obtention de courant de démarrage de deuxième fonctionnement (S46) est supérieur au deuxième courant utilisable (Imit, DmaxP, DmaxB) obtenu par le dispositif d'obtention de deuxième courant utilisable (S55, S56) dans au moins un deuxième actionneur parmi l'un ou plusieurs deuxièmes actionneurs (56, 86 ; 252 ; 352 ; 400), limiter un fonctionnement d'au moins l'un desdits au moins un deuxième actionneur dans lequel le courant de démarrage de deuxième fonctionnement demandé (DtP, DtB) est supérieur au deuxième courant utilisable (Imit, DmaxP, DmaxB) ;
dans lequel le contrôleur d'actionneur comprend en outre :
un dispositif d'obtention de rapport cyclique maximal admissible (S56) configuré pour obtenir un rapport cyclique maximal admissible (DmaxP, DmaxB) sur la base du deuxième courant utilisable (Imit, DmaxP, DmaxB) obtenu par le dispositif d'obtention de deuxième courant utilisable (S55, S56) pour chacun de l'un ou plusieurs deuxièmes actionneurs (56, 86 ; 252 ; 352 ; 400), le rapport cyclique maximal admissible (DmaxP, DmaxB) étant une valeur maximale d'un rapport cyclique d'un courant pouvant être fourni à chacun de l'un ou plusieurs deuxièmes actionneurs (56, 86 ; 252 ; 352 ; 400) ; et
un dispositif d'obtention de rapport cyclique demandé (S46) configuré pour obtenir un rapport cyclique demandé (DtP, DtB) sur la base du courant de démarrage de deuxième fonctionnement demandé (DtP, DtB) obtenu par le dispositif d'obtention de courant de démarrage de deuxième fonctionnement (S46) pour chacun de l'un ou plusieurs deuxièmes actionneurs (56, 86 ; 252 ; 352 ; 400), le rapport cyclique demandé (DtP, DtB) étant un rapport cyclique d'un courant d'alimentation demandé pour chacun de l'un ou plusieurs deuxièmes actionneurs (56, 86 ; 252 ; 352 ; 400),
dans lequel le limiteur de fonctionnement (S6-S8) comprend un limiteur de rapport cyclique (S6-S8) configuré pour, lorsque le rapport cyclique demandé (DtP, DtB) obtenu par le dispositif d'obtention de rapport cyclique demandé (S46) est supérieur au rapport cyclique maximal admissible (DmaxP, DmaxB) obtenu par le dispositif d'obtention de rapport cyclique maximal admissible (S56) dans au moins un deuxième actionneur parmi l'un ou plusieurs deuxièmes actionneurs (56 , 86 ; 252 ; 352 ; 400), limiter un rapport cyclique de contrôle (DP*, DB*) à une valeur inférieure ou égale au rapport cyclique maximal admissible (DmaxP, DmaxB), le rapport cyclique de contrôle (DP*, DB*) étant un rapport cyclique d'un courant à fournir à au moins l'un de l'au moins un deuxième actionneur dans lequel le rapport cyclique demandé (DtP, DtB) est supérieur au rapport cyclique maximal admissible (DmaxP, DmaxB).

2. Contrôleur d'actionneur (8 ; 202 ; 302) selon la revendication 1, dans lequel le limiteur de fonctionnement (S6-S8) comprend un limiteur de courant d'appel (S6-S8) configuré pour réduire un courant d'appel pour chacun de l'au moins un actionneur en limitant un fonctionnement de chacun de l'au moins un actionneur au début de l'opération.

3. Système installé sur véhicule, comprenant :
une source d'alimentation montée sur véhicule (4) qui est une source d'alimentation installée dans un véhicule ;
un dispositif monté sur véhicule (6 ; 200 ; 300) pouvant être actionné par de l'énergie électrique fournie par la source d'alimentation montée sur véhicule (4) ; et
un contrôleur de dispositif monté sur véhicule (8) pouvant être actionné par de l'énergie électrique fournie par la source d'alimentation montée sur véhicule (4) et configuré pour contrôler le dispositif monté sur véhicule (6 ; 200 ; 300), le contrôleur de dispositif monté sur véhicule étant un contrôleur d'actionneur selon la revendication 1 ou 2,
dans lequel le dispositif monté sur véhicule (6 ; 200 ; 300) comprend lesdits un ou plusieurs actionneurs (52L, 52R, 56, 70L, 70R, 72L, 72R, 74, 86 ; 222, 223, 230, 231, 234, 252 ; 326, 340, 344, 372, 374, 346, 348, 352 ; 400).

4. Système installé sur véhicule selon la revendication 3,
dans lequel la source d'alimentation montée sur véhicule (4) comprend une source d'alimentation principale (120) et une source d'alimentation auxiliaire (122),
dans lequel le système installé sur véhicule comprend un dispositif d'obtention d'état d'alimentation principale (S1) configuré pour obtenir si le système installé sur véhicule est dans un état dans lequel l'énergie électrique est distribuable par la source d'alimentation principale (120) au dispositif monté sur véhicule (6 ; 200 ; 300) et au contrôleur de dispositif monté sur véhicule (8), et
dans lequel le limiteur de fonctionnement (S6-S8) est configuré pour contrôler au moins un actionneur parmi l'un ou plusieurs actionneurs (52L, 52R, 56, 70L, 70R, 72L, 72R, 74, 86 ; 222, 223, 230, 231, 234, 252 ; 326, 340, 344, 372, 374, 346, 348, 352 ; 400) lorsque le dispositif d'obtention d'état d'alimentation principale (S1) obtient que le système installé sur véhicule est dans un état dans lequel l'énergie électrique n'est pas distribuable par la source d'alimentation principale (120) au dispositif monté sur véhicule (6 ; 200 ; 300) et au contrôleur de dispositif monté sur véhicule (8).

5. Système installé sur véhicule selon la revendication 3 ou 4, dans lequel le dispositif monté sur véhicule (6 ; 200 ; 300) comprend un moteur de pompe (56 ; 252 ; 352) configuré pour entraîner une pompe (54 ; 250 ; 350) configurée pour fournir une pression hydraulique à un cylindre de roue (30 ; 220 ; 320) d'un frein hydraulique (12 ; 214, 216 ; 318) prévu pour une roue (10, 14) du véhicule.

6. Système installé sur véhicule selon l'une quelconque des revendications 3 à 5, dans lequel le dispositif monté sur véhicule (6) comprend une pluralité de moteurs de frein (86) configurés pour entraîner respectivement une pluralité de freins électriques (16) prévus respectivement pour une pluralité de roues (14) du véhicule pour réduire respectivement les rotations de la pluralité de roues (14).

7. Système installé sur véhicule selon l'une quelconque des revendications 3 à 6, dans lequel le dispositif monté sur véhicule (6 ; 200 ; 300) comprend :
une pluralité de cylindres de roue (30 ; 220 ; 320) respectivement pour une pluralité de freins hydrauliques (12 ; 216 ; 318) prévus respectivement pour une pluralité de roues (10) du véhicule pour réduire respectivement les rotations de la pluralité de roues (10) ;
une source de pression hydraulique ; et
une ou plusieurs soupapes électromagnétiques (52, 58 ; 326, 340, 344, 346, 348) prévues entre la source de pression hydraulique et chacun de la pluralité de cylindres de roue (30 ; 220 ; 320).
